# EUROPEAN PATENT APPLICATION

(11) **EP 4 746 280 A1**
(43) Date of publication of application: **20.05.2026**
(21) Application number: 24855228.3
(22) Date of filing: 27.02.2024
(51) Int. Cl.: H02M 7/5387, H02M 1/38, H02M 1/088, H02M 1/32

(54) **INVERTER AND WAVE-TRANSMITTING CONTROL METHOD**

(30) Priority: 18.08.2023 CN 202311055318
(71) Applicant: Huawei Digital Power Technologies Co., Ltd., Shenzhen, Guangdong 518043 (CN)
(72) Inventor: MAO, Zhu, Shenzhen, Guangdong 518043 (CN); HU, Yaowei, Shenzhen, Guangdong 518043 (CN); ZHAO, Jun, Shenzhen, Guangdong 518043 (CN)
(74) Representative: Gill Jennings & Every LLP
(86) International application number: PCT/CN2024/078808
(87) International publication number: WO 2025/039497

(57) **Abstract**

This application provides an inverter and a control method for sending a PWM driver gating signal. The inverter includes a primary-side circuit, a transformer, a secondary-side circuit, and a controller. The controller is configured to: in response to a change of an absolute value of an alternating current voltage output by a filter circuit from being greater than an absolute value of a preset voltage threshold to being less than or equal to the absolute value of the preset voltage threshold, control the inverter to switch from a first working mode to a second working mode, to enable at least one and at most three of four switching transistors included in a bridge arm to be turned on. The solution provided in this application can ensure that a current of a secondary-side winding of the transformer has a freewheeling path and avoid a problem that secondary-side switching transistors are directly connected, so that a risk of damage to the switching transistors caused by inaccurate determining of a polarity of the alternating current voltage is eliminated.

## Description

This application claims priority to Chinese Patent Application No. 202311055318.5, filed with the China National Intellectual Property Administration on August 18, 2023 and entitled "INVERTER AND CONTROL METHOD FOR SENDING PWM DRIVER GATING SIGNAL", which is incorporated herein by reference in its entirety.

### TECHNICAL FIELD

Embodiments of this application relate to the field of electric power technologies, and in particular, to an inverter and a control method for sending a PWM driver gating signal.

### BACKGROUND

For various converters that are connected to a grid by using a bidirectional switch as a half bridge arm on a secondary side, to control an output voltage and power, a port voltage is sampled. Because there is a one-stage filter circuit or a multi-stage filter circuit between the port voltage and the bidirectional switch, a phase difference and an amplitude difference exist between an alternating current voltage of an output port and an output voltage of the bidirectional switch, and a polarity of the output voltage of the bidirectional switch cannot be accurately determined based on the detected alternating current voltage of the output port. In addition, when the alternating current voltage of the output port is small, it is possible that the polarity of the output voltage of the bidirectional switch is incorrectly determined. If the polarity of the output voltage of the bidirectional switch is incorrectly determined, in a process of switching switching transistors by a controller, the bidirectional switches may be both turned off or on, and a current of a secondary-side winding of a transformer has no freewheeling path or switching transistors of a secondary-side circuit are directly connected, causing damage to the switching transistors.

### SUMMARY

This application provides an inverter and a control method for sending a PWM driver gating signal, to ensure that a current of a secondary-side winding of a transformer has a freewheeling path and avoid a problem that switching transistors of a secondary-side circuit are directly connected, so that a risk of damage to the switching transistors is eliminated.

According to a first aspect, an inverter is provided, including: a primary-side circuit, where the primary-side circuit is configured to convert a direct current into an alternating current; a transformer, where the transformer is configured to perform voltage boosting or voltage bucking on the alternating current output by the primary-side circuit; a secondary-side circuit, where the secondary-side circuit is configured to: convert a frequency of the boosted or bucked alternating current and filter the alternating current obtained after frequency conversion, the secondary-side circuit includes a half-bridge circuit and a filter circuit, the half-bridge circuit includes a bridge arm and at least two capacitors, the two capacitors are connected in series and then connected in parallel to the bridge arm, the bridge arm includes an upper half bridge arm and a lower half bridge arm, a connection point between the upper half bridge arm and the lower half bridge arm is connected to one end of a secondary-side winding of the transformer, a connection point between the two capacitors is connected to the other end of the secondary-side winding of the transformer, the upper half bridge arm and the lower half bridge arm each include a group of switching transistors, two switching transistors included in each group of the switching transistors each include a freewheeling diode connected in parallel, freewheeling directions of two freewheeling diodes connected in parallel in each group of the switching transistors are opposite, and the filter circuit is connected to the half-bridge circuit and outputs an alternating current voltage; and a controller, where the controller is configured to control the switching transistors of the bridge arm to be turned on and off. The inverter includes a first working mode and a second working mode. In the first working mode, three of the four switching transistors in the bridge arm are all turned on, and a remaining switching transistor is turned off. In the second working mode, the two switching transistors in the upper half bridge arm are both turned on, and the two switching transistors in the lower half bridge arm are both turned off, or the two switching transistors in the upper half bridge arm are both turned off, and the two switching transistors in the lower half bridge arm are both turned on. The controller is further configured to: in response to a change of an absolute value of the alternating current voltage output by the filter circuit from being greater than an absolute value of a preset voltage threshold to being less than or equal to the absolute value of the preset voltage threshold, control the inverter to switch from the first working mode to the second working mode, to enable at least one and at most three of the four switching transistors included in the bridge arm to be turned on.

In this embodiment of this application, in response to the change of the absolute value of the alternating current voltage output by the filter circuit from being greater than the absolute value of the preset voltage threshold to being less than or equal to the absolute value of the preset voltage threshold, the controller controls the inverter to switch from the first working mode to the second working mode, to enable at least one of the four switching transistors included in the bridge arm to be turned on, so that a current of the secondary-side winding of the transformer has a freewheeling path at any moment. In addition, at most three of the four switching transistors included in the bridge arm are enabled to be turned on, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being greater than the absolute value of the preset voltage threshold to being less than or equal to the absolute value of the preset voltage threshold, when two of the three switching transistors that are turned on in the first working mode are the same as two target switching transistors that are turned on in the second working mode to be switched to, turn off a switching transistor other than the target switching transistors in the three switching transistors that are turned on in the first working mode.

In this embodiment of this application, before and after the controller switches the switching transistor, a quantity of freewheeling paths of the current of the secondary-side winding of the transformer changes from three to two. Although there is one less freewheeling path for the current, the current always has a freewheeling path. In addition, in this embodiment of this application, the controller directly turns off the switching transistor other than the target switching transistors in the three switching transistors that are turned on in the first working mode, and a quantity of turned-on switching transistors changes from three to two, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, first turn off a switching transistor whose freewheeling direction in a bidirectional current path of the half-bridge circuit in the first working mode is opposite to a current direction of a unidirectional current path of the half-bridge circuit in the first working mode, then turn on a switching transistor that is not turned on in the unidirectional current path, and then turn off a switching transistor whose freewheeling direction in the bidirectional current path is the same as the current direction of the unidirectional current path. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, the controller switches states of the switching transistors step by step. Therefore, in a process of switching the states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through the secondary-side winding of the transformer is the same as a direction of a current in a unidirectional current path in the first working mode, first simultaneously turn off two switching transistors in a bidirectional current path of the half-bridge circuit in the first working mode, and then turn on a switching transistor that is not turned on in the unidirectional current path of the half-bridge circuit in the first working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when one of the three switching transistors that are turned on in the first working mode is the same as one target switching transistor that is turned on in the second working mode to be switched to, the controller switches states of the switching transistors with reference to the direction of the current flowing through the secondary-side winding of the transformer. Particularly, when the direction of the current flowing through the secondary-side winding of the transformer is the same as the direction of the current in the unidirectional current path, a quantity of actions of the controller is reduced.

In some possible designs, the controller is configured to: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through the secondary-side winding of the transformer is opposite to a direction of a current in a unidirectional current path in the first working mode, first turn off a switching transistor whose freewheeling direction in a bidirectional current path is opposite to the current direction of the unidirectional current path, then turn on a switching transistor that is not turned on in the unidirectional current path, and then turn off a switching transistor whose freewheeling direction in the bidirectional current path is the same as the current direction of the unidirectional current path. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when one of the three switching transistors that are turned on in the first working mode is the same as one target switching transistor that is turned on in the second working mode to be switched to, the controller switches states of the switching transistors with reference to the direction of the current flowing through the secondary-side winding of the transformer. When the direction of the current flowing through the secondary-side winding of the transformer is opposite to the direction of the current in the unidirectional current path, the controller switches states of the switching transistors step by step. In a process of switching the states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is further configured to: in response to a change of the absolute value of the alternating current voltage output by the filter circuit from being less than or equal to the absolute value of the preset voltage threshold to being greater than the absolute value of the preset voltage threshold, control the inverter to switch from the second working mode to the first working mode, to enable at least one and at most three of the four switching transistors included in the bridge arm to be turned on.

In this embodiment of this application, in response to the change of the absolute value of the alternating current voltage output by the filter circuit from being less than or equal to the absolute value of the preset voltage threshold to being greater than the absolute value of the preset voltage threshold, the controller controls the inverter to switch from the second working mode to the first working mode, to enable at least one of the four switching transistors included in the bridge arm to be turned on, so that the current of the secondary-side winding of the transformer has a freewheeling path at any moment. In addition, at most three of the four switching transistors included in the bridge arm are enabled to be turned on, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being less than or equal to the absolute value of the preset voltage threshold to being greater than the absolute value of the preset voltage threshold, when two switching transistors that are turned on in the second working mode are the same as two of three target switching transistors that are turned on in the first working mode to be switched to, turn on a switching transistor other than the two turned-on switching transistors in the target switching transistors.

In this embodiment of this application, before and after the controller switches the switching transistor, the current of the secondary-side winding of the transformer has an additional freewheeling path, and the current always has a freewheeling path. In addition, in this embodiment of this application, the controller turns on the switching transistor other than the two turned-on switching transistors in the target switching transistors, and a quantity of turned-on switching transistors changes from two to three, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, first turn on a switching transistor whose freewheeling direction in the bidirectional current path of the half-bridge circuit in the first working mode to be switched to is the same as the current direction of the unidirectional current path of the half-bridge circuit in the first working mode, then turn off a switching transistor that is in the unidirectional current path and that does not belong to the target switching transistors, and then turn on a switching transistor that is not turned on in the bidirectional current path. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, the controller turns on or off the switching transistors step by step. In a process of switching the states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, and the direction of the current flowing through the secondary-side winding of the transformer is the same as the direction of the current in the unidirectional current path in the first working mode, first turn off a switching transistor that is in the unidirectional current path of the half-bridge circuit in the first working mode and that does not belong to the target switching transistors, and then simultaneously turn on switching transistors that are not turned on in the bidirectional current path of the half-bridge circuit in the first working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when one of the two switching transistors that are turned on in the second working mode is the same as the target switching transistors that are turned on in the first working mode to be switched to, the controller switches states of the switching transistors with reference to the direction of the current of the secondary-side winding of the transformer. Particularly, when the direction of the current flowing through the secondary-side winding of the transformer is the same as the direction of the current in the unidirectional current path in the first working mode to be switched to, a quantity of actions of the controller is reduced.

In some possible designs, the controller is configured to: in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, and the direction of the current flowing through the secondary-side winding of the transformer is opposite to the direction of the current in the unidirectional current path in the first working mode, first turn on a switching transistor whose freewheeling direction in the bidirectional current path is the same as the current direction of the unidirectional current path, then turn off a switching transistor that is in the unidirectional current path and that does not belong to the target switching transistors, and then turn on a switching transistor that is not turned on in the bidirectional current path. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when one of the two switching transistors that are turned on in the second working mode is the same as the target switching transistors that are turned on in the first working mode to be switched to, the controller switches states of the switching transistors with reference to the direction of the current of the secondary-side winding of the transformer. When the direction of the current flowing through the secondary-side winding of the transformer is opposite to the direction of the current in the unidirectional current path in the first working mode, the controller turns on or off the switching transistors step by step. In a process of switching the states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: after a switching action of controlling a switching transistor to change an on/off state is completed, control another switching transistor to start to perform the switching action of changing the on/off state.

In some possible designs, anodes of the two diodes that are connected in parallel and that are of the two switching transistors included in each group of the switching transistors are connected, or cathodes of the two diodes that are connected in parallel and that are of the two switching transistors included in each group of the switching transistors are connected.

According to a second aspect, an inverter is provided, including: a primary-side circuit, where the primary-side circuit is configured to convert a direct current into an alternating current; a transformer, where the transformer is configured to perform voltage boosting or voltage bucking on the alternating current output by the primary-side circuit; a secondary-side circuit, where the secondary-side circuit is configured to: convert a frequency of the boosted or bucked alternating current and filter the alternating current obtained after frequency conversion, the secondary-side circuit includes a half-bridge circuit and a filter circuit, the half-bridge circuit includes a bridge arm and at least two capacitors, the two capacitors are connected in series and then connected in parallel to the bridge arm, the bridge arm includes an upper half bridge arm and a lower half bridge arm, a connection point between the upper half bridge arm and the lower half bridge arm is connected to one end of a secondary-side winding of the transformer, a connection point between the two capacitors is connected to the other end of the secondary-side winding of the transformer, the upper half bridge arm and the lower half bridge arm each include a group of switching transistors, two switching transistors included in each group of the switching transistors each include a freewheeling diode connected in parallel, freewheeling directions of two freewheeling diodes connected in parallel in each group of the switching transistors are opposite, and the filter circuit is connected to the half-bridge circuit and outputs an alternating current voltage; and a controller, where the controller is configured to control the switching transistors of the bridge arm to be turned on and off. The inverter includes a positive voltage working mode of a first working mode and a negative voltage working mode of the first working mode. In the positive voltage working mode and the negative voltage working mode, three of the four switching transistors in the bridge arm are all turned on, and a remaining switching transistor is turned off. The controller is configured to: in response to a change of the alternating current voltage output by the filter circuit from being greater than a preset positive voltage threshold to being less than a preset negative voltage threshold, control the inverter to switch from the positive voltage working mode of the first working mode to the negative voltage working mode of the first working mode, to enable at least one and at most three of the four switching transistors included in the bridge arm to be turned on.

In this embodiment of this application, in response to the change of the alternating current voltage output by the filter circuit from being greater than the preset positive voltage threshold to being less than the preset negative voltage threshold, the controller controls the inverter to switch from the positive voltage working mode to the negative voltage working mode, to enable at least one of the four switching transistors included in the bridge arm to be turned on, so that a current of the secondary-side winding of the transformer has a freewheeling path at any moment. In addition, at most three of the four switching transistors included in the bridge arm are controlled to be turned on, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the alternating current voltage output by the filter circuit from being greater than the preset positive voltage threshold to being less than the preset negative voltage threshold, when a path of a bidirectional current path of the half-bridge circuit in the positive voltage working mode is the same as a path of a bidirectional current path of the half-bridge circuit in the negative voltage working mode to be switched to, first turn off a switching transistor that is in the three switching transistors that are turned on in the positive voltage working mode and that does not belong to target switching transistors, and then turn on a switching transistor that is not turned on in the target switching transistors, to control the inverter to switch from the positive voltage working mode to the negative voltage working mode, where the target switching transistors are switching transistors that are turned on in the negative voltage working mode. In the bidirectional current path, a current flowing through the secondary-side winding of the transformer has two directions, and the two switching transistors of the upper half bridge arm or the lower half bridge arm through which the current flows are both turned on.

In this embodiment of this application, in response to the change of the alternating current voltage output by the filter circuit from being greater than the preset positive voltage threshold to being less than the preset negative voltage threshold, when the path of the bidirectional current path of the half-bridge circuit in the positive voltage working mode is the same as the path of the bidirectional current path of the half-bridge circuit in the negative voltage working mode to be switched to, the controller acts twice to switch states of the switching transistors. In a process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the alternating current voltage output by the filter circuit from being greater than the preset positive voltage threshold to being less than the preset negative voltage threshold, when the path of the bidirectional current path of the half-bridge circuit in the positive voltage working mode is different from the path of the bidirectional current path of the half-bridge circuit in the negative voltage working mode to be switched to, first turn off a switching transistor whose freewheeling direction in the bidirectional current path of the half-bridge circuit in the positive voltage working mode is the same as a direction of a current flowing through the secondary-side winding of the transformer, then turn on a switching transistor that is not turned on in a unidirectional current path of the half-bridge circuit in the positive voltage working mode, then turn off another turned-on switching transistor in the bidirectional current path of the half-bridge circuit in the positive voltage working mode, and finally turn on the switching transistor whose freewheeling direction in the bidirectional current path of the half-bridge circuit in the positive voltage working mode is the same as the direction of the current flowing through the secondary-side winding of the transformer. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path in the positive voltage working mode is different from the path of the bidirectional current path in the negative voltage working mode to be switched to, the controller acts four times to switch the states of the switching transistors. In the process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the alternating current voltage output by the filter circuit from being greater than the preset positive voltage threshold to being less than the preset negative voltage threshold, when the path of the bidirectional current path of the half-bridge circuit in the positive voltage working mode is different from the path of the bidirectional current path of the half-bridge circuit in the negative voltage working mode to be switched to, and a direction of the current flowing through the secondary-side winding of the transformer is the same as a direction of a current in a unidirectional current path of the half-bridge circuit in the positive voltage working mode, first turn off a switching transistor other than the target switching transistors in the bidirectional current path of the half-bridge circuit in the positive voltage working mode, and then turn on a switching transistor that is not turned on in the unidirectional current path of the half-bridge circuit in the positive voltage working mode, where the target switching transistors are switching transistors that are turned on in the negative voltage working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path in the positive voltage working mode is different from the path of the bidirectional current path in the negative voltage working mode to be switched to, the controller switches the states of the switching transistors with reference to the direction of the current of the secondary-side winding of the transformer. Particularly, when the direction of the current flowing through the secondary-side winding of the transformer is the same as the direction of the current in the unidirectional current path in an initial working mode to be switched to, a quantity of actions of the controller is reduced.

In some possible designs, the controller is configured to: in response to the change of the alternating current voltage output by the filter circuit from being greater than the preset positive voltage threshold to being less than the preset negative voltage threshold, when the path of the bidirectional current path of the half-bridge circuit in the positive voltage working mode is different from the path of the bidirectional current path of the half-bridge circuit in the negative voltage working mode to be switched to, and a direction of the current flowing through the secondary-side winding of the transformer is opposite to a direction of a current in a unidirectional current path of the half-bridge circuit in the positive voltage working mode, first turn off a switching transistor whose freewheeling direction in the bidirectional current path of the half-bridge circuit in the positive voltage working mode is the same as the direction of the current flowing through the secondary-side winding of the transformer, then turn on a switching transistor that is not turned on in the unidirectional current path of the half-bridge circuit in the positive voltage working mode, then turn off another turned-on switching transistor in the bidirectional current path of the half-bridge circuit in the positive voltage working mode, and finally turn on the switching transistor whose freewheeling direction in the bidirectional current path of the half-bridge circuit in the positive voltage working mode is the same as the direction of the current flowing through the secondary-side winding of the transformer. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path of the half-bridge circuit in the positive voltage working mode is different from the path of the bidirectional current path of the half-bridge circuit in the negative voltage working mode to be switched to, the controller switches the states of the switching transistors with reference to the direction of the current of the secondary-side winding of the transformer. When the direction of the current flowing through the secondary-side winding of the transformer is opposite to the direction of the current in the unidirectional current path of the half-bridge circuit in an initial working mode, the controller turns on or off the switching transistors step by step. In the process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is further configured to: in response to a change of the alternating current voltage output by the filter circuit from being less than the preset negative voltage threshold to being greater than the preset positive voltage threshold, control the inverter to switch from the negative voltage working mode of the first working mode to the positive voltage working mode of the first working mode, to enable at least one and at most three of the four switching transistors included in the bridge arm to be turned on.

In this embodiment of this application, in response to the change of the alternating current voltage output by the filter circuit from being less than the preset positive voltage threshold to being greater than the preset negative voltage threshold, the controller controls the inverter to switch from the negative voltage working mode to the positive voltage working mode, to enable at least one of the four switching transistors included in the bridge arm to be turned on, so that the current of the secondary-side winding of the transformer has a freewheeling path at any moment. In addition, at most three of the four switching transistors included in the bridge arm are controlled to be turned on, so that a case in which secondary-side switching transistors are directly connected does not occur, and a risk of damage to the switching transistors caused by inaccurate determining of a polarity of the alternating current voltage is eliminated.

In some possible designs, the controller is configured to: in response to the change of the alternating current voltage output by the filter circuit from being less than the preset negative voltage threshold to being greater than the preset positive voltage threshold, when a path of a bidirectional current path of the half-bridge circuit in the negative voltage working mode is the same as a path of a bidirectional current path of the half-bridge circuit in the positive voltage working mode to be switched to, first turn off a switching transistor that is in the three switching transistors that are turned on in the negative voltage working mode and that does not belong to target switching transistors, and then turn on a switching transistor that is not turned on in the target switching transistors, to control the inverter to switch from the negative voltage working mode to the positive voltage working mode, where the target switching transistors are switching transistors that are turned on in the positive voltage working mode. In the bidirectional current path, a current flowing through the secondary-side winding of the transformer has two directions, and the two switching transistors of the upper half bridge arm or the lower half bridge arm through which the current flows are both turned on.

In this embodiment of this application, when the path of the bidirectional current path in the negative voltage working mode is the same as the path of the bidirectional current path in positive voltage working mode to be switched to, the controller acts twice to switch states of the switching transistor. In a process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the alternating current voltage output by the filter circuit from being less than the preset negative voltage threshold to being greater than the preset positive voltage threshold, when the path of the bidirectional current path of the half-bridge circuit in the negative voltage working mode is different from the path of the bidirectional current path of the half-bridge circuit in the positive voltage working mode to be switched to, first turn off a switching transistor whose freewheeling direction in the bidirectional current path of the half-bridge circuit in the negative voltage working mode is the same as a direction of the current flowing through the secondary-side winding of the transformer, then turn on a switching transistor that is not turned on in a unidirectional current path of the half-bridge circuit in the negative voltage working mode, then turn off another turned-on switching transistor in the bidirectional current path of the half-bridge circuit in the negative voltage working mode, and finally turn on the switching transistor whose freewheeling direction in the bidirectional current path of the half-bridge circuit in the negative voltage working mode is the same as the direction of the current flowing through the secondary-side winding of the transformer. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path in the negative voltage working mode is different from the path of the bidirectional current path in positive voltage working mode to be switched to, the controller acts four times to switch the states of the switching transistor. In the process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: in response to the change of the alternating current voltage output by the filter circuit from being less than the preset negative voltage threshold to being greater than the preset positive voltage threshold, when the path of the bidirectional current path of the half-bridge circuit in the negative voltage working mode is different from the path of the bidirectional current path of the half-bridge circuit in the positive voltage working mode to be switched to, and a direction of the current flowing through the secondary-side winding of the transformer is the same as a direction of a current in a unidirectional current path of the half-bridge circuit in the negative voltage working mode, first turn off a switching transistor other than the target switching transistors in the bidirectional current path of the half-bridge circuit in the negative voltage working mode, and then turn on a switching transistor that is not turned on in the unidirectional current path of the half-bridge circuit in the negative voltage working mode, where the target switching transistors are switching transistors that are turned on in the positive voltage working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path in the negative voltage working mode is different from the path of the bidirectional current path in the positive voltage working mode to be switched to, the controller switches the states of the switching transistors with reference to the direction of the current of the secondary-side winding of the transformer. Particularly, when the direction of the current flowing through the secondary-side winding of the transformer is the same as the direction of the current in the unidirectional current path in an initial working mode to be switched to, a quantity of actions of the controller is reduced.

In some possible designs, the controller is configured to: in response to the change of the alternating current voltage output by the filter circuit from being less than the preset negative voltage threshold to being greater than the preset positive voltage threshold, when the path of the bidirectional current path of the half-bridge circuit in the negative voltage working mode is different from the path of the bidirectional current path of the half-bridge circuit in the positive voltage working mode to be switched to, and a direction of the current flowing through the secondary-side winding of the transformer is opposite to a direction of a current in a unidirectional current path of the half-bridge circuit in the negative voltage working mode, first turn off a switching transistor whose freewheeling direction in the bidirectional current path of the half-bridge circuit in the negative voltage working mode is the same as the direction of the current flowing through the secondary-side winding of the transformer, then turn on a switching transistor that is not turned on in the unidirectional current path of the half-bridge circuit in the negative voltage working mode, then turn off another turned-on switching transistor in the bidirectional current path of the half-bridge circuit in the negative voltage working mode, and finally turn on the switching transistor whose freewheeling direction in the bidirectional current path of the half-bridge circuit in the negative voltage working mode is the same as the direction of the current flowing through the secondary-side winding of the transformer. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, when the path of the bidirectional current path in the negative voltage working mode is different from the path of the bidirectional current path in the positive voltage working mode to be switched to, the controller switches the states of the switching transistors with reference to the direction of the current of the secondary-side winding of the transformer. When the direction of the current flowing through the secondary-side winding of the transformer is opposite to the direction of the current in the unidirectional current path of the half-bridge circuit in the negative voltage working mode, the controller turns on or off the switching transistors step by step. In the process of switching the states of the switching transistors by the controller, it is ensured that at least one switching transistor is in an on state. Therefore, the current of the secondary-side winding of the transformer always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In some possible designs, the controller is configured to: after a switching action of controlling a switching transistor to change an on/off state is completed, control another switching transistor to start to perform the switching action of changing the on/off state.

In some possible designs, anodes of the two diodes that are connected in parallel and that are of the two switching transistors included in each group of the switching transistors are connected, or cathodes of the two diodes that are connected in parallel and that are of the two switching transistors included in each group of the switching transistors are connected.

According to a third aspect, a control method for sending a PWM driver gating signal is provided. The method is applied to an inverter, and includes: in a first working mode, controlling three of four switching transistors in a bridge arm of the inverter to be all turned on and a remaining switching transistor to be turned off, where a secondary-side circuit of the inverter includes a half-bridge circuit and a filter circuit, the half-bridge circuit includes a bridge arm, the bridge arm includes an upper half bridge arm and a lower half bridge arm, the upper half bridge arm and the lower half bridge arm each include a group of switching transistors, two switching transistors included in each group of the switching transistors each include a freewheeling diode connected in parallel, and freewheeling directions of two freewheeling diodes connected in parallel in each group of the switching transistors are opposite; in a second working mode, controlling the two switching transistors in the upper half bridge arm to be both turned on and the two switching transistors in the lower half bridge arm to be both turned off, or controlling the two switching transistors in the upper half bridge arm to be both turned off and the two switching transistors in the lower half bridge arm to be both turned on; and controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold, to enable at least one and at most three of the four switching transistors to be turned on.

In some possible designs, the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold includes: in response to the change of the absolute value of the alternating current voltage output by the filter circuit from being greater than the absolute value of the preset voltage threshold to being less than or equal to the absolute value of the preset voltage threshold, when two of the three switching transistors that are turned on in the first working mode are the same as two target switching transistors that are turned on in the second working mode to be switched to, turning off a switching transistor other than the target switching transistors in the three switching transistors, to control the secondary-side circuit to switch from the first working mode to the second working mode.

In some possible designs, the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold includes: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, first turning off a switching transistor whose freewheeling direction in a bidirectional current path of the half-bridge circuit in the first working mode is opposite to a current direction of a unidirectional current path of the half-bridge circuit in the first working mode, then turning on a switching transistor that is not turned on in the unidirectional current path, and then turning off a switching transistor whose freewheeling direction in the bidirectional current path is the same as the current direction of the unidirectional current path, to control the secondary-side circuit to switch from the first working mode to the second working mode. In the bidirectional current path, a current flowing through a secondary-side winding of a transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In some possible designs, the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold includes: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through a secondary-side winding of a transformer is the same as a direction of a current in a unidirectional current path in the first working mode, first simultaneously turning off two switching transistors in a bidirectional current path of the half-bridge circuit in the first working mode, and then turning on a switching transistor that is not turned on in the unidirectional current path of the half-bridge circuit in the first working mode, to control the secondary-side circuit to switch from the first working mode to the second working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In some possible designs, the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold includes: in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through a secondary-side winding of a transformer is opposite to a direction of a current in a unidirectional current path in the first working mode, first turning off a switching transistor whose freewheeling direction in a bidirectional current path is opposite to the current direction of the unidirectional current path, then turning on a switching transistor that is not turned on in the unidirectional current path, and then turning off a switching transistor whose freewheeling direction in the bidirectional current path is the same as the current direction of the unidirectional current path, to control the secondary-side circuit to switch from the first working mode to the second working mode. In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

For beneficial effects of the third aspect, refer to related content of the first aspect. Details are not described again.

### BRIEF DESCRIPTION OF DRAWINGS

FIG. 1A is a diagram of a scenario applicable to this application;
FIG. 1B is a schematic of a topology of an inverter;
FIG. 2 is a schematic of an inverter according to an embodiment of this application;
FIG. 3 is a schematic of another inverter according to an embodiment of this application;
FIG. 4 is a diagram of partitioning an alternating current voltage output by a filter circuit according to an embodiment of this application;
FIG. 5 and FIG. 6 are respectively schematics of a current loop when an alternating current voltage is in a P region and an O region according to an embodiment of this application;
FIG. 7 and FIG. 8 are respectively schematics of another current loop when an alternating current voltage is in a P region and an O region according to an embodiment of this application;
FIG. 9 and FIG. 10 are respectively schematics of a current loop when an alternating current voltage is in an N region and an O region according to an embodiment of this application;
FIG. 11 and FIG. 12 are respectively schematics of another current loop when an alternating current voltage is in an N region and an O region according to an embodiment of this application;
FIG. 13 and FIG. 14 are respectively schematics of still another current loop when an alternating current voltage is in a P region and an O region according to an embodiment of this application;
FIG. 15 and FIG. 16 are respectively schematics of yet another current loop when an alternating current voltage is in a P region and an O region according to an embodiment of this application;
FIG. 17 and FIG. 18 are respectively schematics of still another current loop when an alternating current voltage is in an N region and an O region according to an embodiment of this application;
FIG. 19 and FIG. 20 are respectively schematics of yet another current loop when an alternating current voltage is in an N region and an O region according to an embodiment of this application;
FIG. 21 is a schematic of a position of an inductor current sampling and zero-crossing detection circuit according to an embodiment of this application;
FIG. 22 is a schematic of an inductor current sampling and zero-crossing detection circuit according to an embodiment of this application;
FIG. 23 is a schematic of another inductor current sampling and zero-crossing detection circuit according to an embodiment of this application;
FIG. 24 to FIG. 27 are schematics of yet another current loop when an alternating current voltage is in a P region and an O region according to an embodiment of this application;
FIG. 28 to FIG. 31 are schematics of yet another current loop when an alternating current voltage is in a P region and an O region according to an embodiment of this application;
FIG. 32 to FIG. 35 are schematics of yet another current loop when an alternating current voltage is in an N region and an O region according to an embodiment of this application;
FIG. 36 to FIG. 39 are schematics of yet another current loop when an alternating current voltage is in an N region and an O region according to an embodiment of this application;
FIG. 40 to FIG. 43 are schematics of yet another current loop when an alternating current voltage is in a P region and an N region according to an embodiment of this application;
FIG. 44 to FIG. 47 are schematics of yet another current loop when an alternating current voltage is in a P region and an N region according to an embodiment of this application;
FIG. 48 to FIG. 51 are schematics of yet another current loop when an alternating current voltage is in a P region and an N region according to an embodiment of this application;
FIG. 52 to FIG. 55 are schematics of yet another current loop when an alternating current voltage is in a P region and an N region according to an embodiment of this application;
FIG. 56 is another schematic of a half-bridge circuit in an inverter according to an embodiment of this application; and
FIG. 57 is a diagram of a control method for sending a PWM driver gating signal according to an embodiment of this application.

### DESCRIPTION OF EMBODIMENTS

The following describes technical solutions in embodiments of this application with reference to accompanying drawings.

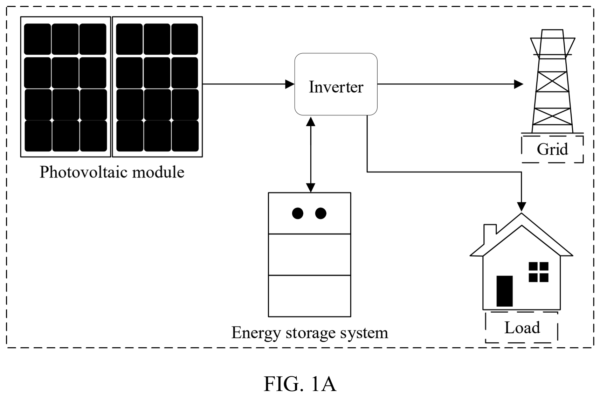

FIG. 1A is a diagram of a scenario applicable to this application. Refer to FIG. 1A. A photovoltaic module converts solar energy into a direct current through photovoltaic effect, and an inverter converts the direct current into an alternating current, and then sends the alternating current to a grid or supplies power to a load. The inverter may alternatively convert a direct current from an energy storage system into an alternating current, and then sends the alternating current to the grid or supplies power to the load.

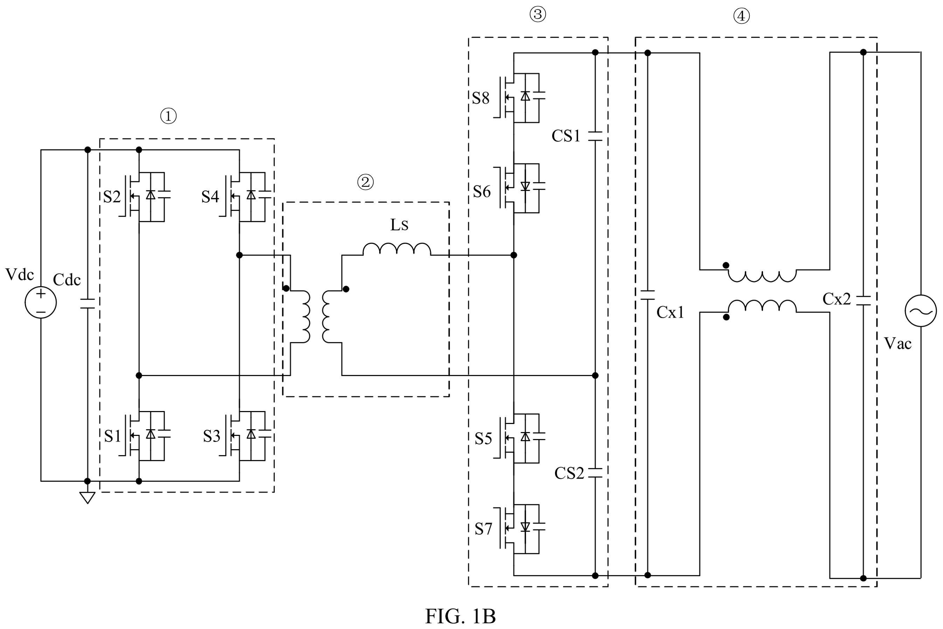

FIG. 1B is a schematic of a topology of an inverter. A primary side (namely, a dashed box ①) includes an H bridge, a transformer is in a middle dashed box ②, and Ls represents leakage inductance of the transformer or an inductor connected in series with the transformer. On a secondary side (namely, a dashed box ③), a half-bridge circuit including four switching transistors (including S5, S6, S7, and S8) and two bridge arm capacitors (including Cs1 and Cs2) is connected to an output filter (namely, a dashed box ④). In the half-bridge circuit, S8 and S6 form a bidirectional switch, and S5 and S7 form a bidirectional switch.

In a positive half cycle of an alternating current voltage Vac, S5 and S8 are turned on or off, and S6 and S7 are normally turned on. In a negative half cycle of the alternating current voltage, S6 and S7 are turned on or off, and S5 and S8 are normally turned on. The current technical problems are as follows:
For an inverter circuit in FIG. 1B, to control an output voltage and power, a voltage Vac at an output port is sampled. Because there is a one-stage filter circuit or a multi-stage filter circuit between the current voltage Vac at the output port and a voltage V87 across two ends of the switching transistors S8 to S7, a phase difference and an amplitude difference exist between the alternating current voltage Vac at the output port and the voltage V87 across the two ends of the switching transistors S8 to S7, and a polarity of the output voltage V87 of the bidirectional switch cannot be accurately determined based on the detected alternating current voltage Vac at the output port. In addition, an upper bridge arm and a lower bridge arm on the secondary side are respectively two bidirectional switches. When the voltage Vac at the output port is small, the polarity of the voltage V87 across the two ends of the switching transistors S8 to S7 may be incorrectly determined. After the polarity of the output voltage V87 of the switching transistors S8 to S7 is incorrectly determined, in a process of switching the switching transistors by a controller, both the bidirectional switching transistors may be turned off or on, and a current of the inductor Ls has no freewheeling path or switching transistors of a secondary-side circuit are directly connected, causing damage to the switching transistors.

This application provides an inverter, to ensure that an inductor current has a freewheeling path and avoid a problem that secondary-side switching transistors are directly connected, so that a risk of damage to the switching transistors caused by inaccurate determining of a polarity of an alternating current voltage is eliminated.

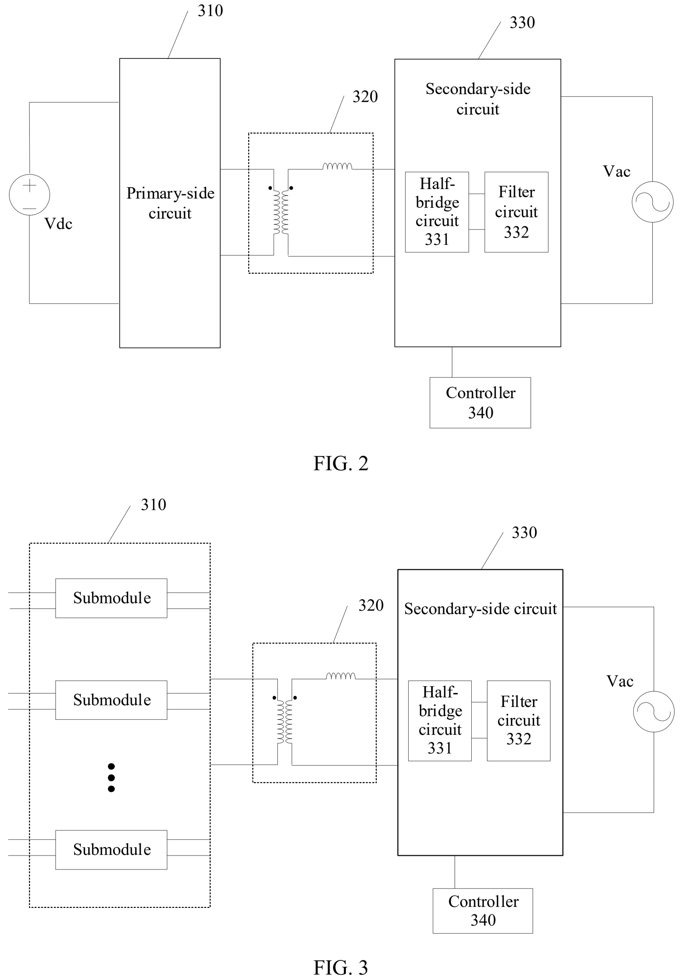

FIG. 2 and FIG. 3 are schematics of two inverters according to an embodiment of this application.

Refer to FIG. 2. The inverter in this embodiment of this application specifically includes a primary-side circuit 310, a transformer 320, a secondary-side circuit 330, and a controller 340. The inverter provided in this embodiment of this application may be specifically applicable to a single-stage isolated inverter topology.

One end of the primary-side circuit 310 is configured to input a direct current voltage Vdc, and the other end of the primary-side circuit 310 is connected to a primary-side winding of the transformer 320. The primary-side circuit 310 is configured to convert the input direct current voltage Vdc into a high-frequency alternating current rectangular wave signal. Refer to FIG. 3. The primary-side circuit 310 may alternatively be derived as including a plurality of submodules connected in series or in parallel, where each submodule may be a half-bridge circuit or a full-bridge circuit.

The transformer 320 is configured to perform voltage boosting or voltage bucking on an alternating current output by the primary-side circuit 310. The transformer 320 may be designed as a transformer whose amount of secondary-side leakage inductance is equal to Ls. Alternatively, refer to FIG. 2 and FIG. 3. The transformer 320 may be designed as a transformer with a very small amount of leakage inductance, and an inductive device Ls connected in series is separately disposed. In this embodiment of this application, an example in which an inductor Ls connected in series is separately disposed is used.

In this embodiment of this application, the secondary-side circuit 330 includes a half-bridge circuit 331 and a filter circuit 332. The half-bridge circuit 331 includes a bridge arm and at least two capacitors. The two capacitors are connected in series and then connected in parallel to the bridge arm. The bridge arm includes an upper half bridge arm and a lower bridge arm. A connection point between the upper half bridge arm and the lower half bridge arm is connected to one end of a secondary-side winding of the transformer 320 by using an inductive device. A connection point between the two capacitors is connected to the other end of the secondary-side winding of the transformer 320. The upper half bridge arm and the lower half bridge arm each include a group of switching transistors. Two switching transistors included in each group of the switching transistors each include a freewheeling diode connected in parallel. Freewheeling directions of two freewheeling diodes connected in parallel in each group of the switching transistors are opposite. The filter circuit 332 is connected to the half-bridge circuit 331 and outputs an alternating current voltage.

In this embodiment of this application, the inverter includes a first working mode and a second working mode. In the first working mode, three of the four switching transistors in the bridge arm are all turned on, and a remaining switching transistor is turned off. In the second working mode, the two switching transistors in the upper half bridge arm are both turned on, and the two switching transistors in the lower half bridge arm are both turned off, or the two switching transistors in the upper half bridge arm are both turned off, and the two switching transistors in the lower half bridge arm are both turned on.

The controller 340 is further configured to: in response to a change of an absolute value of the alternating current voltage output by the filter circuit 332 from being greater than an absolute value of a preset voltage threshold to being less than or equal to the absolute value the preset voltage threshold, control the inverter to switch from the first working mode to the second working mode, to enable at least one and at most three of the four switching transistors included in the bridge arm to be turned on.

In this embodiment of this application, the preset voltage threshold includes a preset positive voltage threshold and a preset negative voltage threshold. When a value of the alternating current voltage output by the filter circuit 332 is greater than the preset positive voltage threshold, or the value of the alternating current voltage output by the filter circuit 332 is less than or equal to the preset negative voltage threshold, the inverter runs in the first working mode. When the value of the alternating current voltage output by the filter circuit 332 is greater than or equal to the preset negative voltage threshold and less than or equal to the preset positive voltage threshold, the inverter runs in the second working mode.

An absolute value of the preset positive voltage threshold may be equal or not equal to an absolute value of the preset negative voltage threshold. Both the absolute value of the preset positive voltage threshold and the absolute value of the preset negative voltage threshold are less than a maximum positive voltage value output by the filter circuit 332. The preset positive voltage threshold and the preset negative voltage threshold may be fixed values, or may be variable values.

The primary-side circuit 310 in this embodiment of this application may be an H-bridge circuit, such as a half-bridge circuit, a full-bridge circuit, or another circuit that can convert a direct current into a high-frequency alternating current. The primary-side circuit may include a plurality of H-bridge circuits. For example, a plurality of half-bridge circuits are connected in series or in parallel, or a half-bridge circuit and a full-bridge circuit are connected in series or in parallel. This is not limited.

In this embodiment of this application, the upper half bridge arm and the lower half bridge arm of the half-bridge circuit 331 each include two switching transistors, and the two switching transistors included in each bridge arm form a bidirectional switch. The switching transistor in this embodiment of this application may be specifically a metal-oxide semiconductor field-effect transistor (metal-oxide-semiconductor field-effect transistor, MOSFET), an insulated gate bipolar transistor (insulated gate bipolar transistor, IGBT), a gallium nitride (gallium nitride, GaN) high electron mobility transistor (high electron mobility transistor, HEMT), or the like. Specifically, the upper half bridge arm or the lower half bridge arm may include two discretely disposed switching transistors, or may include a module integrating two switching transistors, or may include a monolithic bidirectional (on or off) device (for example, a monolithic bidirectional GaN device). For example, the upper half bridge arm includes a switching transistor S8 and a switching transistor S6 that are connected in series, and the lower half bridge arm includes a switching transistor S5 and a switching transistor S7 that are connected in series.

Each switching transistor in this embodiment of this application includes a freewheeling diode connected in parallel, and the freewheeling diode may be referred to as a body diode (body-diode).

In this embodiment of this application, the filter circuit 332 may be a single-stage circuit or a multi-stage circuit. One side of the filter circuit 332 is connected to the half-bridge circuit 331, and the other side of the filter circuit 332 is connected to an alternating current power supply.

In this embodiment of this application, the controller 340 may obtain the alternating current voltage output by the filter circuit 332. In an implementation, the filter circuit is a single-stage circuit, and the controller 340 obtains an alternating current voltage output by the single-stage circuit. In an implementation, the filter circuit is a multi-stage circuit, and the controller 340 obtains an alternating current voltage output by any circuit of the multi-stage circuit. The controller 340 compares the alternating current voltage output by the filter circuit 332 with the preset positive voltage threshold and the preset negative voltage threshold, and controls a working mode of the inverter based on a comparison result.

For example, it is assumed that the preset positive voltage threshold is 20 V, and the preset negative voltage threshold is -20 V. If the voltage output by the filter circuit 332 is 220 V, which is greater than the preset positive voltage threshold 20 V, the controller 340 controls the inverter to run in a positive voltage working mode of the first working mode. If the voltage output by the filter circuit 332 is -220 V, which is less than the preset negative voltage threshold -20 V, the controller 340 controls the inverter to run in a negative voltage working mode of the first working mode. If the voltage output by the filter circuit 332 is 10 V, which is less than the preset positive voltage threshold 20 V and greater than the preset negative voltage threshold -20 V, the controller 340 controls the inverter to run in the second working mode.

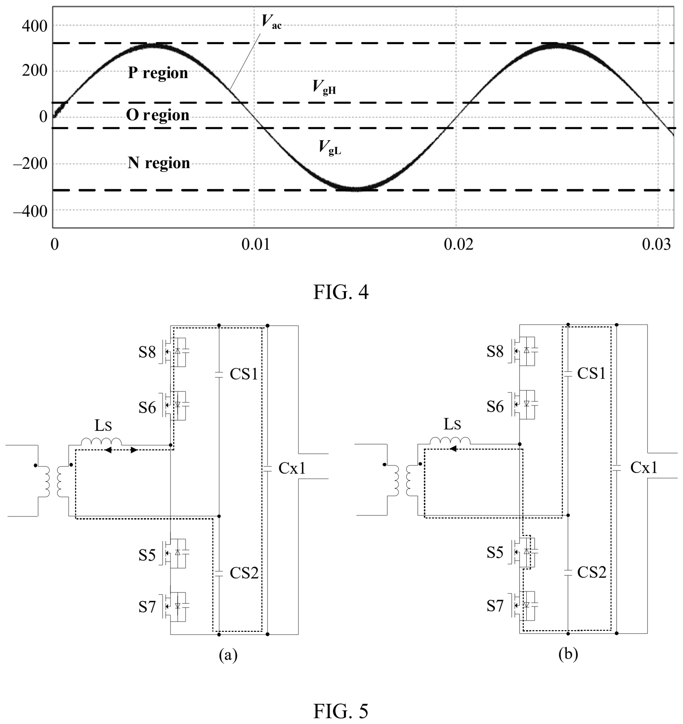

In some implementations, the alternating current voltage output by the filter circuit 332 may be partitioned, as shown in FIG. 4. If the alternating current voltage is greater than or equal to the preset positive voltage threshold (the preset positive voltage threshold is shown as VgH in the figure), the alternating current voltage is in a P region. If the alternating current voltage is less than or equal to the preset negative voltage threshold (the preset negative voltage threshold is shown as VgL in the figure), the alternating current voltage is in an N region. If the alternating current voltage is greater than the preset negative voltage threshold and less than the preset positive voltage threshold, the alternating current voltage is in an O region. For a voltage in the P region or the N region, the controller 340 controls the inverter to run in the first working mode; and for a voltage in the O region, the controller 340 controls the inverter to run in the second working mode.

A difference between the first working mode and the second working mode lies in that states of the switching transistors are different. The states of the switching transistors include an on state and an off state.

Specifically, when the controller 340 controls the inverter to run in the first working mode, the controller 340 controls three of the four switching transistors included in the bridge arm to be all turned on, and a remaining switching transistor to be turned off. In the first working mode, a plurality of loops are formed by the transformer, the turned-on switching transistors, and the two capacitors, and an inductor current is a specific current loop of the plurality of current loops at any moment. When the controller 340 controls the inverter to run in the second working mode, the controller 340 controls the two switching transistors included in the upper half bridge arm to be both turned on and the two switching transistors included in the lower half bridge arm to be both turned off, or controls the two switching transistors included in the upper half bridge arm to be both turned off and the two switching transistors included in the lower half bridge arm to be both turned on. In the second working mode, only one loop is formed by the transformer, the turned-on switching transistors, and the two capacitors.

It should be noted that, if the alternating current voltage is in the P region or the N region, the controller 340 does not control the inverter to run in the second working mode. This is because a switching frequency of the switching transistors is relatively high when the inverter runs in the second working mode, which easily causes damage to the switching transistors.

In this embodiment of this application, in response to the change of the absolute value of the alternating current voltage output by the filter circuit from being greater than the absolute value of the preset voltage threshold to being less than or equal to the absolute value of the preset voltage threshold, the controller controls the inverter to switch from the first working mode to the second working mode, to enable at least one of the four switching transistors included in the bridge arm to be turned on, so that a current of the secondary-side winding of the transformer has a freewheeling path at any moment. In addition, at most three of the four switching transistors included in the bridge arm are enabled to be turned on, so that a case in which secondary-side switching transistors are directly connected does not occur, and a risk of damage to the switching transistors caused by inaccurate determining of a polarity of the alternating current voltage is eliminated.

It is pointed out above that the alternating current voltage output by the filter circuit 332 may be partitioned, such as the P region, the O region, and the N region. In addition, in some cases, due to an external reason or some other reasons, the alternating current voltage output by the filter circuit 332 may fluctuate, causing the alternating current voltage to enter another region from one region. The controller 340 uses corresponding policies based on different cases. For details, refer to the following description.

In an embodiment, the controller 340 is configured to: in response to the change of the absolute value of the alternating current voltage output by the filter circuit 332 from being greater than the absolute value of the preset voltage threshold to being less than or equal to the absolute value of the preset voltage threshold, when two of the three switching transistors that are turned on in the first working mode are the same as two target switching transistors that are turned on in the second working mode to be switched to, turn off a switching transistor other than the target switching transistors in the three switching transistors that are turned on in the first working mode, to control the inverter to switch from the first working mode to the second working mode.

In this embodiment of this application, that the inverter switches from the first working mode to the second working mode includes two cases: The alternating current voltage enters the O region from the P region, or the alternating current voltage enters the O region from the N region. The following uses an example in which the transformer is connected in series with the inductor Ls for description in different cases.

### Case 1: The alternating current voltage enters the O region from the P region

(1) The first working mode in which the two switching transistors included in the upper half bridge arm and one switching transistor included in the lower half bridge arm are turned on, and the other switching transistor included in the lower half bridge arm is turned off is switched to the second working mode in which the two switching transistors included in the upper half bridge arm are turned on, and the two switching transistors included in the lower half bridge arm are turned off.

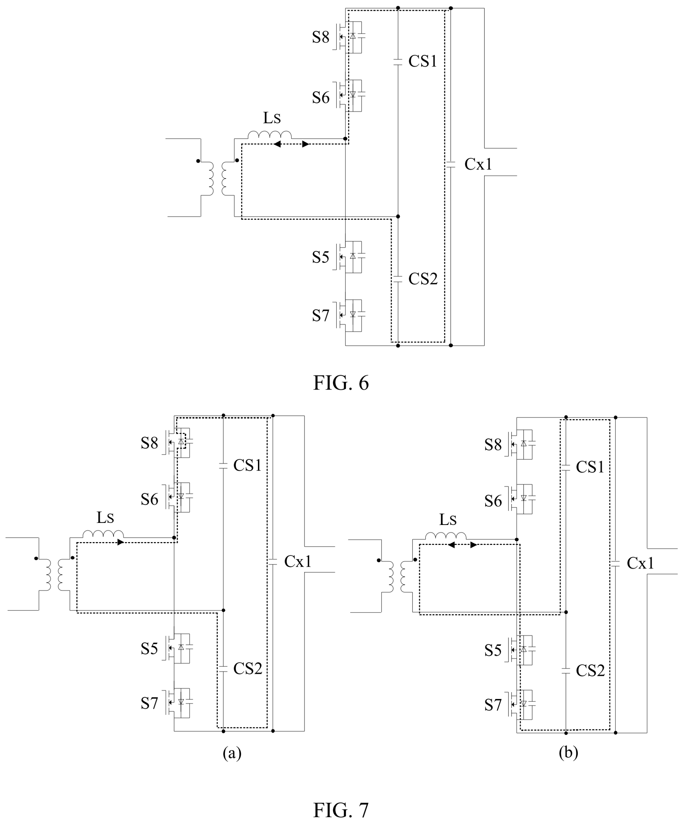

FIG. 5 and FIG. 6 are respectively schematics of a current loop when an alternating current voltage is in a P region and an O region according to an embodiment of this application.

Refer to (a) in FIG. 5 and (b) in FIG. 5. S8 and S6 that are included in the upper half bridge arm and S7 of the lower half bridge arm are turned on, and S5 of the lower half bridge arm is turned off. Refer to FIG. 6. S8 and S6 that are included in the upper half bridge arm are turned on, and S7 and S5 that are included in the lower half bridge arm are turned off.

Refer to (a) in FIG. 5. A current flowing through the inductor Ls has two directions. If a dotted terminal (that is, one end marked as a black dot on the transformer shown in the figure) of the transformer is a positive electrode, the current flows out from a positive electrode of the secondary-side winding of the transformer (that is, the dotted terminal of the transformer), flows through the switching transistor S6, the switching transistor S8, a filter capacitor Cx1, and a bridge arm capacitor Cs2, and returns to a negative electrode of the secondary-side winding of the transformer. If the dotted terminal of the transformer is a negative electrode, the current flows out from a positive electrode of the secondary-side winding of the transformer (that is, a non-dotted terminal of the transformer), flows through the bridge arm capacitor Cs2, the filter capacitor Cx1, the switching transistor S8, and the switching transistor S6, and returns to a negative electrode of the secondary-side winding of the transformer.

Refer to (b) in FIG. 5. The current flowing through the inductor Ls has only one direction. In this case, the dotted terminal of the transformer is a negative electrode, and the current flows out from a positive electrode of the secondary-side winding of the transformer (that is, the non-dotted terminal of the transformer), flows through a bridge arm capacitor Cs1, the filter capacitor Cx1, S7, and the freewheeling diode on S5, and returns to a negative electrode of the secondary-side winding of the transformer.

In FIG. 6, a current flowing through the inductor Ls has two directions. A current path is similar to that in (a) in FIG. 5. Details are not described again.

If the current path shown in FIG. 5 is switched to the current path shown in FIG. 6, because two of the three switching transistors (that is, S6 and S8) that are turned on in the first working mode are the same as the target switching transistors, in response to the change of the absolute value of the alternating current voltage output by the filter circuit 332 from being greater than the absolute value of the preset voltage threshold to being less than or equal to the absolute value of the preset voltage threshold, the controller 340 only needs to directly turn off S7.

In this embodiment of this application, before the controller 340 turns off S7, the current may pass through S6, S8, Cx1, and Cs2 to form a loop, and pass through Cs1, Cx1, S7, and the freewheeling diode on S5 to form a loop. When S7 is turned off, the current may still pass through S6, S8, Cx1, and Cs2 to form a loop. This is equivalent to that there is one less freewheeling path for the inductor current, and the freewheeling path of the inductor current is not affected.

(2) In the first working mode, the two switching transistors included in the lower half bridge arm and one switching transistor included in the upper half bridge arm are turned on, and the other switching transistor included in the upper half bridge arm is turned off; and in the second working mode, the two switching transistors included in the upper half bridge arm are turned off, and the two switching transistors included in the lower half bridge arm are turned on.

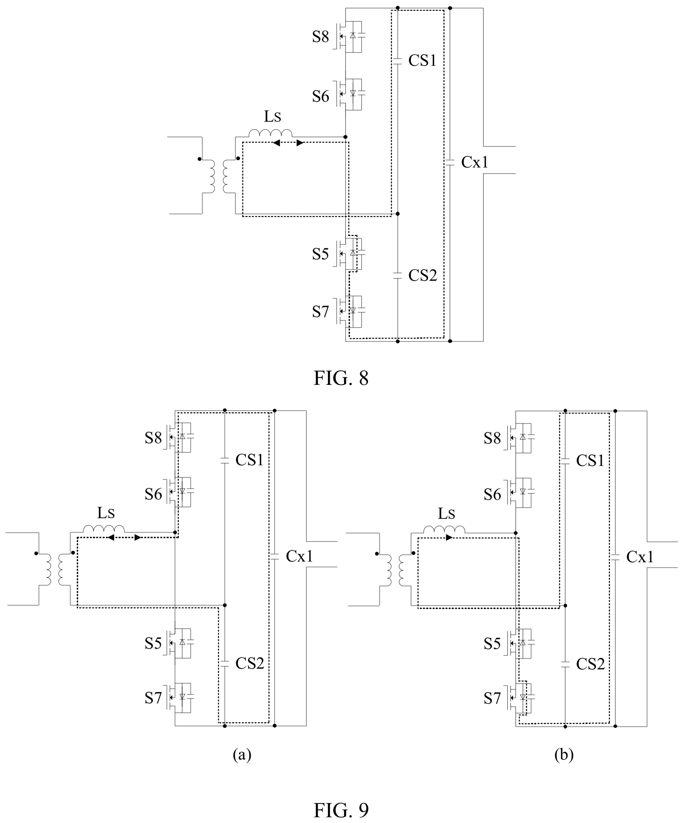

FIG. 7 and FIG. 8 are respectively schematics of another current loop when an alternating current voltage is in a P region and an O region according to an embodiment of this application.

Refer to (a) in FIG. 7 and (b) in FIG. 7. S5, S7, and S6 are turned on, and S8 is turned off. Refer to FIG. 8. S8 and S6 are turned off, and S7 and S5 are turned on.

Refer to (a) in FIG. 7. A current flowing through the inductor Ls has only one direction. In this case, the dotted terminal of the transformer is a positive electrode, and the current flows out from a positive electrode of the secondary-side winding of the transformer (that is, the dotted terminal of the transformer), flows through S6, the freewheeling diode on S8, Cx1, and Cs1, and returns to a negative electrode of the secondary-side winding of the transformer.

Refer to (b) in FIG. 7. The current flowing through the inductor Ls has two directions. If the dotted terminal of the transformer is a positive electrode, the current flows out from a positive electrode of the secondary-side winding of the transformer (that is, the dotted terminal of the transformer), flows through S5, S7, Cx1, and Cs1, and returns to a negative electrode of the secondary-side winding of the transformer. If the dotted terminal of the transformer is a negative electrode, the current flows out from a positive electrode of the secondary-side winding of the transformer (that is, the non-dotted terminal of the transformer), flows through Cs1, Cx1, S7, and S5, and returns to a negative electrode of the secondary-side winding of the transformer.

In FIG. 8, a current flowing through the inductor Ls has two directions. A current path is similar to that in (b) in FIG. 7. Details are not described again.

If the current path shown in FIG. 7 is switched to the current path shown in FIG. 8, because two of the three switching transistors (that is, S5 and S7) that are turned on in the first working mode are the same as the target switching transistors, in response to the change of the absolute value of the alternating current voltage output by the filter circuit 332 from being greater than the absolute value of the preset voltage threshold to being less than or equal to the absolute value of the preset voltage threshold, the controller 340 only needs to directly turn off S6 without affecting the freewheeling path of the inductor current.

### Case 2: The alternating current voltage enters the O region from the N region

(1) In the first working mode, the two switching transistors included in the upper half bridge arm and one switching transistor included in the lower half bridge arm are turned on, and the other switching transistor included in the lower half bridge arm is turned off; and in the second working mode, the two switching transistors included in the upper half bridge arm are turned on, and the two switching transistors included in the lower half bridge arm are turned off.

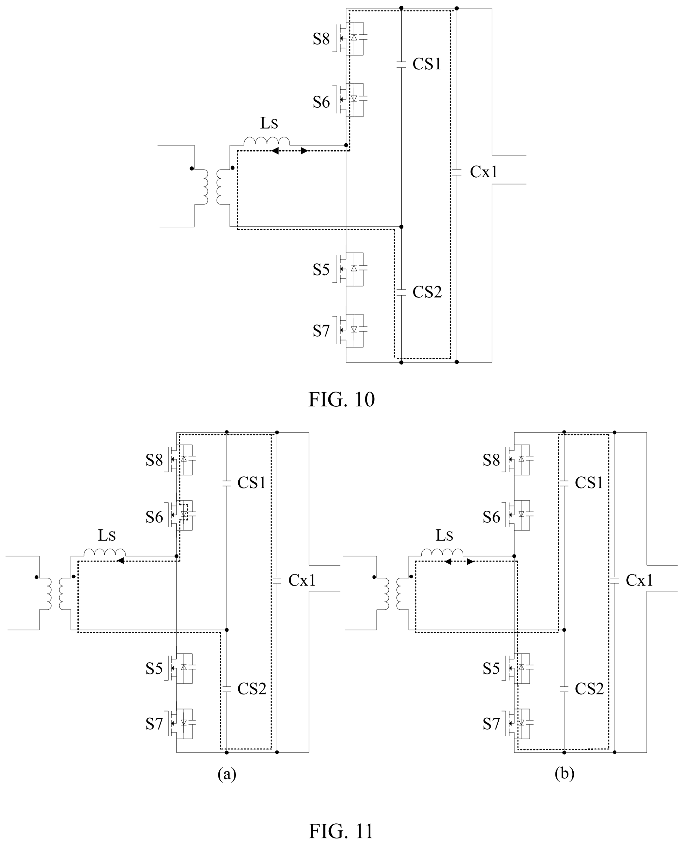

FIG. 9 and FIG. 10 are respectively schematics of a current loop when an alternating current voltage is in an N region and an O region according to an embodiment of this application.

Refer to (a) in FIG. 9 and (b) in FIG. 9. S8, S6, and S5 are turned on, and S7 is turned off. Refer to FIG. 10. S8 and S6 are turned on, and S7 and S5 are turned off.

For current loops in (a) in FIG. 9 and (b) in FIG. 9, refer to the current loops in (a) in FIG. 5 and (b) in FIG. 5. A difference lies in that the current in (b) in FIG. 9 passes through the freewheeling diode on S7, while the current in (b) in FIG. 5 passes through the freewheeling diode on S5. The current loop in FIG. 10 is similar to that in (a) in FIG. 9. Details are not described again.

If the current path shown in FIG. 9 is switched to the current path shown in FIG. 10, because two of the three switching transistors (that is, S6 and S8) that are turned on in the first working mode are the same as the target switching transistors, in response to the change of the absolute value of the alternating current voltage output by the filter circuit 332 from being greater than the absolute value of the preset voltage threshold to being less than or equal to the absolute value of the preset voltage threshold, the controller 340 only needs to directly turn off S5 without affecting the freewheeling path of the inductor current.

(2) In the first working mode, the two switching transistors included in the lower half bridge arm and one switching transistor included in the upper half bridge arm are turned on, and the other switching transistor included in the upper half bridge arm is turned off; and in the second working mode, the two switching transistors included in the upper half bridge arm are turned off, and the two switching transistors included in the lower half bridge arm are turned on.

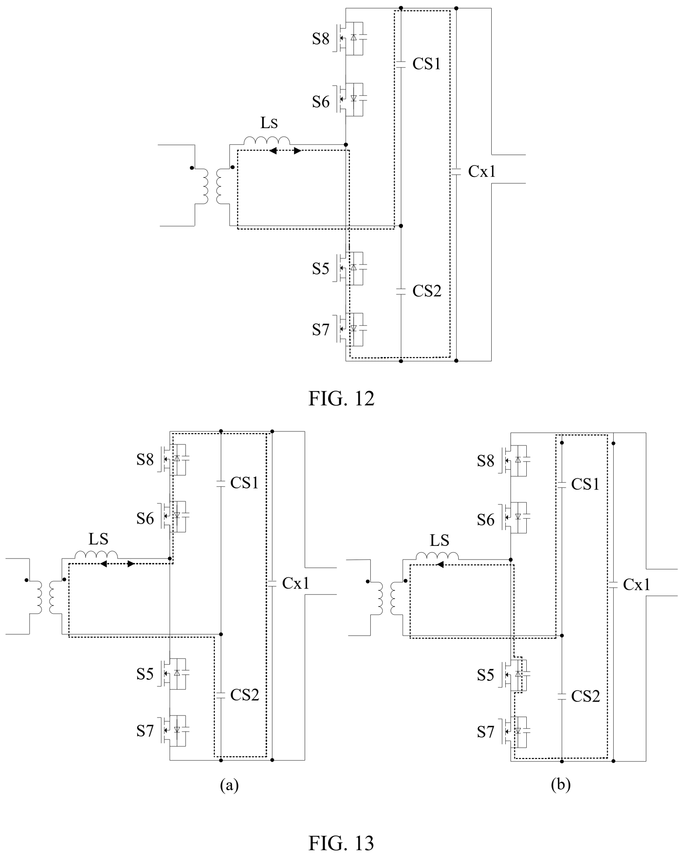

FIG. 11 and FIG. 12 are respectively schematics of another current loop when an alternating current voltage is in an N region and an O region according to an embodiment of this application.

Refer to (a) in FIG. 11 and (b) in FIG. 11. S5, S7, and S8 are turned on, and S6 is turned off. Refer to FIG. 12. S8 and S6 are turned off, and S7 and S5 are turned on.

For current loops in (a) in FIG. 11 and (b) in FIG. 11, refer to the current loops in (a) in FIG. 7 and (b) in FIG. 7. A difference lies in that the current in (a) in FIG. 11 passes through the freewheeling diode on S6, and the current in (a) in FIG. 7 passes through the freewheeling diode on S8. The current loop in FIG. 12 is similar to that in (b) in FIG. 11.

If the current path shown in FIG. 11 is switched to the current path shown in FIG. 12, because two of the three switching transistors (that is, S5 and S7) that are turned on in the first working mode are the same as the target switching transistors, in response to the change of the absolute value of the alternating current voltage output by the filter circuit 332 from being greater than the absolute value of the preset voltage threshold to being less than or equal to the absolute value of the preset voltage threshold, the controller 340 only needs to directly turn off S8 without affecting the freewheeling path of the inductor current.

In this embodiment of this application, because two of the three switching transistors that are turned on in the first working mode are the same as the two target switching transistors that are turned on in the second working mode to be switched to, the controller turns off a switching transistor other than the target switching transistors in the three switching transistors that are turned on in the first working mode. Before and after the controller switches the switching transistor, a quantity of freewheeling paths of the current of the secondary-side winding of the transformer changes from three to two. Although there is one less freewheeling path for the current, the current always has a freewheeling path. In addition, in this embodiment of this application, the controller directly turns off the switching transistor other than the target switching transistors in the three switching transistors that are turned on in the first working mode, and a quantity of turned-on switching transistors changes from three to two, so that a case in which secondary-side switching transistors are directly connected does not occur, and a risk of damage to the switching transistors caused by inaccurate determining of a polarity of the alternating current voltage is eliminated.

In an embodiment, the controller 340 is configured to: in response to the change of the absolute value of the alternating current voltage output by the filter circuit 332 from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, first turn off a switching transistor whose freewheeling direction in a bidirectional current path of the half-bridge circuit 331 in the first working mode is opposite to a current direction of a unidirectional current path of the half-bridge circuit 331 in the first working mode, then turn on a switching transistor that is not turned on in the unidirectional current path, and then turn off a switching transistor whose freewheeling direction in the bidirectional current path is the same as the current direction of the unidirectional current path, to control the inverter to switch from the first working mode to the second working mode.

In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

### Case 1: The alternating current voltage enters the O region from the P region

(1) The first working mode in which the two switching transistors included in the upper half bridge arm and one switching transistor included in the lower half bridge arm are turned on, and the other switching transistor included in the lower half bridge arm is turned off is switched to the second working mode in which the two switching transistors included in the upper half bridge arm are turned off, and the two switching transistors included in the lower half bridge arm are turned on.

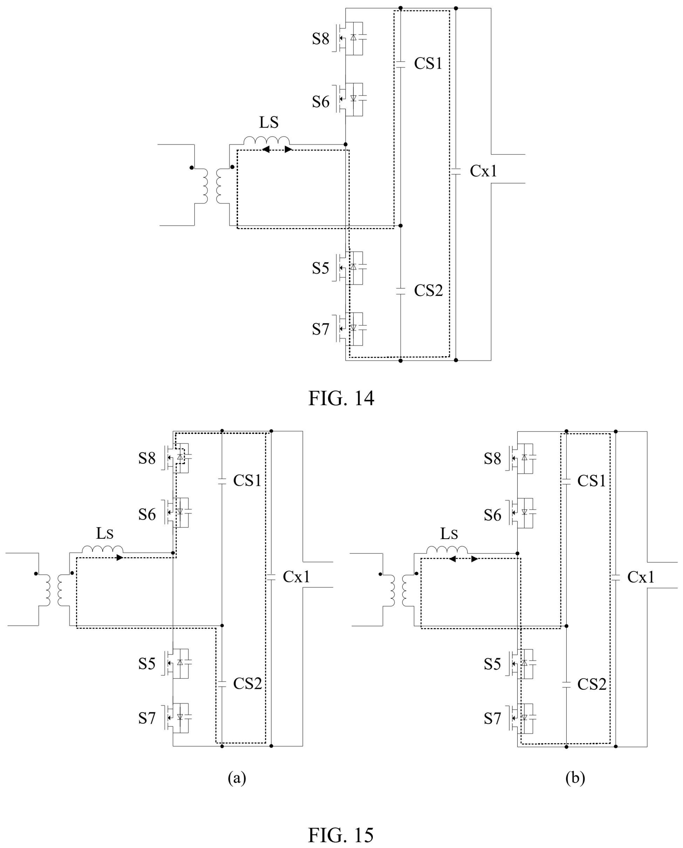

FIG. 13 and FIG. 14 are respectively schematics of still another current loop when an alternating current voltage is in a P region and an O region according to an embodiment of this application.

For states of the switching transistors and current paths shown in (a) in FIG. 13 and (b) in FIG. 13, refer to the content in (a) in FIG. 5 and (b) in FIG. 5. For states of the switching transistors and current paths shown in FIG. 14, refer to the content in FIG. 8. Details are not described again.

With reference to FIG. 13 and FIG. 14, switching transistors that are turned on in the first working mode are S6, S7, and S8, and target switching transistors that are turned on in the second working mode to be switched to are S5 and S7. Only one (that is, S7) of the three switching transistors that are turned on in the first working mode is the same as the target switching transistors. If the current path shown in FIG. 13 is switched to the current path shown in FIG. 14, in response to the change of the absolute value of the alternating current voltage output by the filter circuit 332 from being greater than the absolute value of the preset voltage threshold to being less than or equal to the absolute value of the preset voltage threshold, the controller 340 first turns off a switching transistor whose freewheeling direction in the bidirectional current path is opposite to the current direction of the unidirectional current path, that is, S8; then turn on a switching transistor that is not conducted in the unidirectional current path, that is, S5; and then turn off a switching transistor whose freewheeling direction in the bidirectional current path is the same as the current direction of the unidirectional current path, that is, S6.

In this embodiment of this application, switching transistors that are turned on in an initial state are S6, S7, and S8. The controller 340 first turns off S8, so that S6 and S7 are in an on state. The inductor current passes through S6, the freewheeling diode on S8, Cx1, and Cs2 to form a freewheeling path, and the inductor current passes through Cs1, Cx1, S7, and the freewheeling diode on S5 to form a freewheeling path. After S8 is completely turned off, the controller 340 turns on S5, so that the S5, S6, and S7 are in an on state, the current passes through Cs1, Cx1, S7, and S5 to form a freewheeling path, and the inductor current may alternatively pass through S6, the freewheeling diode on S8, Cx1, and Cs2 to form a freewheeling path. After S5 is completely turned on, the controller 340 turns off S6, so that S7 and S5 are in an on state, and the current passes through Cs1, Cx1, S7, and S5 to form a freewheeling path.

It should be noted that, because switching of a switching transistor between an on state and an off state takes a specific period of time, when the controller 340 controls switching of the state of the switching transistor, it needs to be ensured that after each switching action of controlling the switching transistor to change the on/off state is completed, that is, after the switching transistor is completely turned on or completely turned off, a next switching transistor is controlled to start to perform the switching action of changing the on/off state. That is, each time before an action of switching an on/off state of a switching transistor is performed, the action of switching an on/off state of a previous switching transistor needs to be fully completed. The foregoing rule needs to be followed when the controller 340 controls to switch the states of the switching transistors below.

(2) The first working mode in which the two switching transistors included in the lower half bridge arm and one switching transistor included in the upper half bridge arm are turned on, and the other switching transistor included in the upper half bridge arm is turned off is switched to the second working mode in which the two switching transistors included in the upper half bridge arm are turned on, and the two switching transistors included in the lower half bridge arm are turned off.

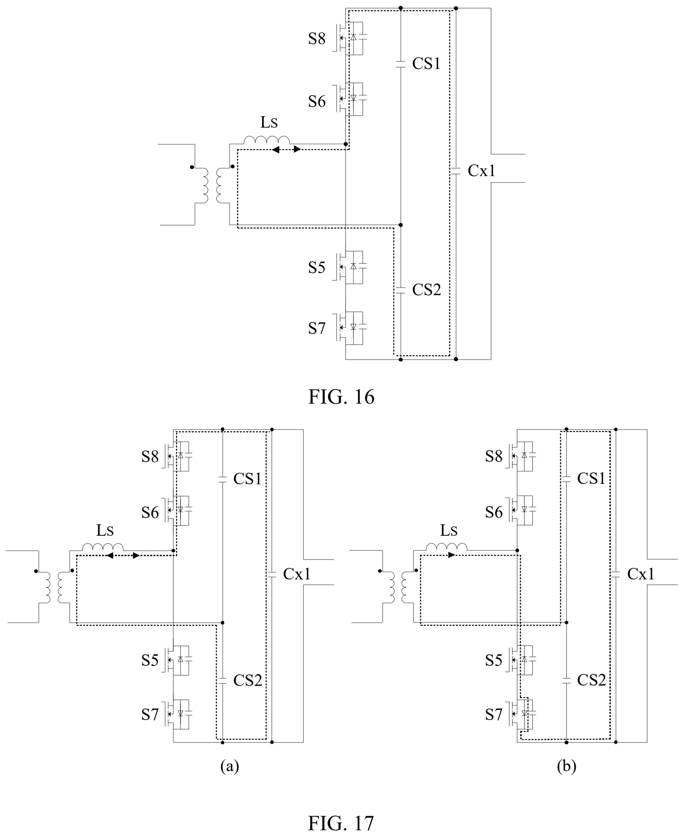

FIG. 15 and FIG. 16 are respectively schematics of yet another current loop when an alternating current voltage is in a P region and an O region according to an embodiment of this application.

For states of the switching transistors and current paths shown in (a) in FIG. 15 and (b) in FIG. 15, refer to the content in (a) in FIG. 7 and (b) in FIG. 7. For states of the switching transistors and current paths shown in FIG. 16, refer to the content in FIG. 6. Details are not described again.

With reference to FIG. 15 and FIG. 16, switching transistors that are turned on in the first working mode are S5, S6, and S7, and target switching transistors that are turned on in the second working mode to be switched to are S6 and S8. Only S6 of the three switching transistors that are turned on in the first working mode is the same as the target switching transistors. If the current path shown in FIG. 15 is switched to the current path shown in FIG. 16, in response to the change of the absolute value of the alternating current voltage output by the filter circuit 332 from being greater than the absolute value of the preset voltage threshold to being less than or equal to the absolute value of the preset voltage threshold, the controller 340 first turns off S5, then turns on S8, and then turns off S7. For brevity, a freewheeling path of the inductor current in a switching process is not described in detail.

### Case 2: The alternating current voltage enters the O region from the N region

(1) In the first working mode, the two switching transistors included in the upper half bridge arm and one switching transistor included in the lower half bridge arm are turned on, and the other switching transistor included in the lower half bridge arm is turned off; and in the second working mode, the two switching transistors included in the upper half bridge arm are turned off, and the two switching transistors included in the lower half bridge arm are turned on.

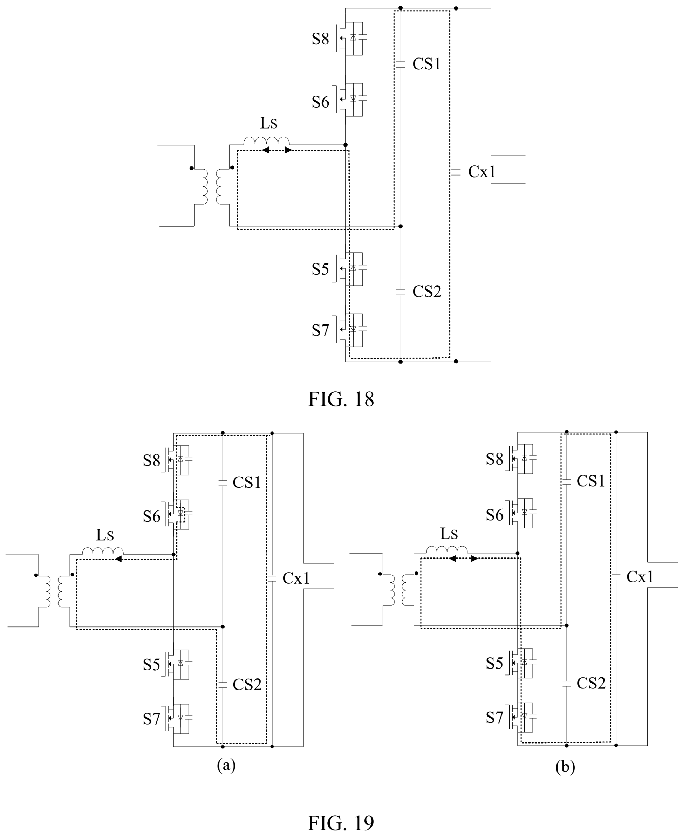

FIG. 17 and FIG. 18 are respectively schematics of still another current loop when an alternating current voltage is in an N region and an O region according to an embodiment of this application.

For the states of the switching transistors and the current loops shown in (a) in FIG. 17 and (b) in FIG. 17, refer to the content in (a) in FIG. 9 and (b) in FIG. 9. For the states of the switching transistors and the current loop shown in FIG. 18, refer to the content in FIG. 12. Details are not described again.

With reference to FIG. 17 and FIG. 18, switching transistors that are turned on in the first working mode are S5, S6, and S8, target switching transistors that are turned on in the second working mode to be switched to are S5 and S7. Only S5 of the three switching transistors that are turned on in the first working mode is the same as the target switching transistors. If the current path shown in FIG. 17 is switched to the current path shown in FIG. 18, in response to the change of the absolute value of the alternating current voltage output by the filter circuit 332 from being greater than the absolute value of the preset voltage threshold to being less than or equal to the absolute value of the preset voltage threshold, the controller 340 first turns off S6, then turns on S7, and then turns off S8.

(2) In the first working mode, the two switching transistors included in the lower half bridge arm and one switching transistor included in the upper half bridge arm are turned on, and the other switching transistor included in the upper half bridge arm is turned off; and in the second working mode, the two switching transistors included in the upper half bridge arm are turned on, and the two switching transistors included in the lower half bridge arm are turned off.

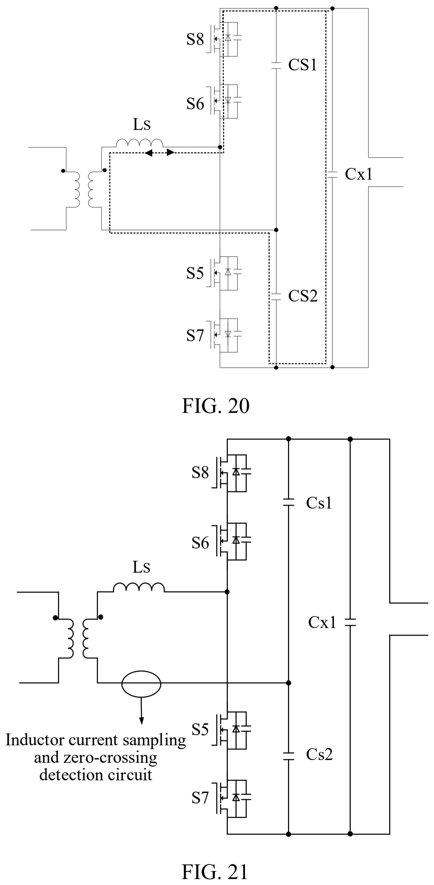

FIG. 19 and FIG. 20 are respectively schematics of yet another current loop when an alternating current voltage is in an N region and an O region according to an embodiment of this application.

For states of the switching transistors and current paths shown in (a) in FIG. 19 and (b) in FIG. 19, refer to the content in (a) in FIG. 11 and (b) in FIG. 11. For states of the switching transistors and current paths shown in FIG. 20, refer to the content in FIG. 10. Details are not described again.

With reference to FIG. 19 and FIG. 20, switching transistors that are turned on in the first working mode are S5, S7, and S8, and target switching transistors that are turned on in the second working mode to be switched to are S6 and S8. Only S8 of the three switching transistors that are turned on in the first working mode is the same as the target switching transistors. If the current path shown in FIG. 19 is switched to the current path shown in FIG. 20, in response to the change of the absolute value of the alternating current voltage output by the filter circuit 332 from being greater than the absolute value of the preset voltage threshold to being less than or equal to the absolute value of the preset voltage threshold, the controller 340 first turns off S7, then turns on S6, and then turns off S5.

In conclusion, in a process in which the controller 340 controls to switch the switching transistors, the inductor current always has a freewheeling path. In addition, at any moment, only some of the four switching transistors included in the upper half bridge arm and the lower half bridge arm are in an on state, and a case in which the switching transistors are directly connected does not occur. This eliminates a risk of damage to the switching transistors.

It should be noted that, in the foregoing switching process, the controller 340 cannot first turn off a switching transistor whose freewheeling direction in the bidirectional current path is the same as the current direction of the unidirectional current path, which may cause damage to the switching transistors.

FIG. 13 and FIG. 14 are used as an example. Switching transistors that are turned on in an initial state are S6, S7, and S8, and switching transistors that are turned on in a target state are S7 and S5. The switching transistor whose freewheeling direction in the bidirectional current path is the same as the current direction of the unidirectional current path is S6. If S6 is turned off first, a current flowing from a dotted terminal of the secondary-side winding of the transformer cannot pass through the freewheeling diode on S6 due to unidirectional conductivity of a diode, and the inductor current has no freewheeling path, causing damage to the switching transistors.

In addition, it should be further noted that, when only one of the three switching transistors that are turned on in the first working mode is the same as the target switching transistors, a switching transistor that is not turned on in the target switching transistors cannot be directly turned on. If the switching transistor that is not turned on in the target switching transistors is directly turned on blindly, a case in which the switching transistors are directly connected occurs, causing damage to the switching transistors.

FIG. 13 and FIG. 14 are still used as an example. In the first working mode, S8, S6, and S7 are turned on, and S5 is turned off. In the second working mode, the target switching transistors that are turned on are S7 and S5. Only S7 of the switching transistors that are turned on in the first working mode is the same as the target switching transistors. If S5 is directly turned on, in this case, the four switching transistors S5, S6, S7, and S8 are directly connected, causing damage to the switching transistors.

In this embodiment of this application, if one of the three switching transistors that are turned on in the first working mode is the same as the target switching transistors that are turned on in the second working mode to be switched to, the controller switches states of the switching transistors step by step. In a process of switching the states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

With reference to FIG. 13 to FIG. 20, the foregoing describes a process in which the controller 340 controls the inverter to switch between the first working mode and the second working mode. The controller 340 needs to perform three steps in the switching process. To reduce a quantity of times of actions of the controller 340, the controller 340 may switch the states of the switching transistors with reference to a direction of the current flowing through the secondary-side winding of the transformer. In this application, an example in which the secondary-side winding of the transformer is connected in series with an inductor is still used. Before this, a method for detecting a direction of an inductor current is first briefly described.

FIG. 21 is a schematic of a position of an inductor current sampling and zero-crossing detection circuit according to an embodiment of this application. The inductor current sampling and zero-crossing detection circuit may be located at any position through which a current flows, for example, the position shown in FIG. 21.

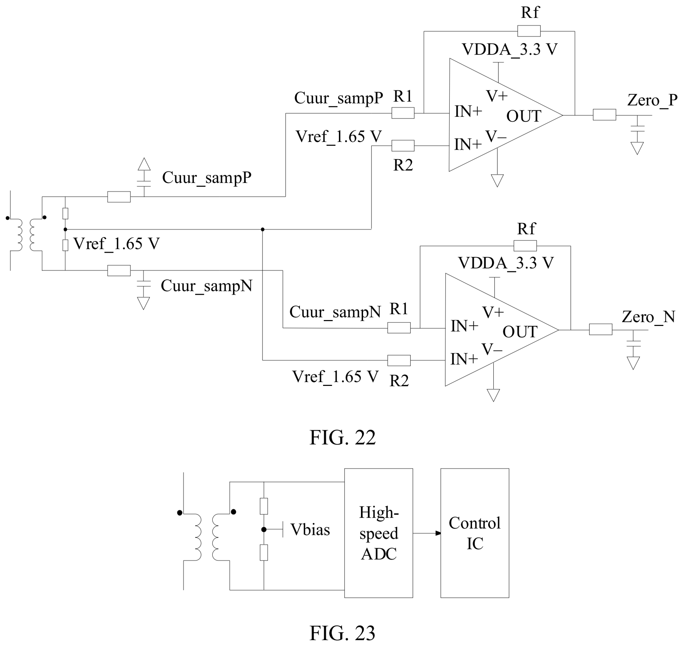

FIG. 22 is a schematic of an inductor current sampling and zero-crossing detection circuit according to an embodiment of this application. Zero_P is configured to detect positive zero crossing of an inductor current, and Zero_N is configured to detect negative zero crossing of the inductor current. For a specific policy for determining a polarity of the inductor current, refer to Table 1.

**Table 1**

| | | |
|---|---|---|
| Inductor current | Zero_P=1, Zero_N=0 | The inductor current is positive |
| | Zero_P=0, Zero_N=1 | The inductor current is negative |
| | Zero_P=1, Zero_N=1 | The inductor current is approximately 0 (freewheel to 0) |
| | Zero_P=0, Zero_N=0 | |

Refer to Table 1. When Zero_P=1 and Zero_N=0, the controller determines that the inductor current is positive; when Zero_P=0 and Zero_N=1, the controller determines that the inductor current is negative; or when Zero_P=1 and Zero_N=1, or when Zero_P=0 and Zero_N=0, the inductor current is approximately 0. This embodiment of this application mainly describes a case in which the inductor current is positive or negative.

FIG. 23 is a schematic of another inductor current sampling and zero-crossing detection circuit according to an embodiment of this application. A high-speed analog-to-digital converter (analog-to-digital converter, ADC) is used to send a signal sample in real time to an IC for control, and a polarity of a current is determined through program implementation in the IC. In FIG. 23, the high-speed ADC may be a discrete ADC chip, or may be an on-chip ADC peripheral integrated inside the control IC.

In an embodiment, the controller 340 is configured to: in response to the change of the absolute value of the alternating current voltage output by the filter circuit 332 from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of the current flowing through the secondary-side winding of the transformer is the same as a direction of a current in the unidirectional current path in the first working mode, first simultaneously turn off two switching transistors in the bidirectional current path of the half-bridge circuit 331 in the first working mode, and then turn on a switching transistor that is not turned on in the unidirectional current path of the half-bridge circuit 331 in the first working mode, to control the inverter to switch from the first working mode to the second working mode.

In an embodiment, the controller 340 is configured to: in response to the change of the absolute value of the alternating current voltage output by the filter circuit 332 from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through the secondary-side winding of the transformer is opposite to a direction of a current in the unidirectional current path in the first working mode, first turn off a switching transistor whose freewheeling direction in the bidirectional current path is opposite to the current direction of the unidirectional current path, then turn on a switching transistor that is not turned on in the unidirectional current path, and then turn off a switching transistor whose freewheeling direction in the bidirectional current path is the same as the current direction of the unidirectional current path, to control the inverter to switch from the first working mode to the second working mode.

In this embodiment of this application, in the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, the controller 340 may switch the states of the switching transistors with reference to a direction of a current of the secondary-side winding of the transformer. The following uses an example in which the transformer is connected in series with the inductor Ls for description in different cases.

### Case 1: The alternating current voltage enters the O region from the P region

(1) The first working mode in which the two switching transistors included in the lower half bridge arm and one switching transistor included in the upper half bridge arm are turned on, and the other switching transistor included in the upper half bridge arm is turned off is switched to the second working mode in which the two switching transistors included in the upper half bridge arm are turned on, and the two switching transistors included in the lower half bridge arm are turned off.

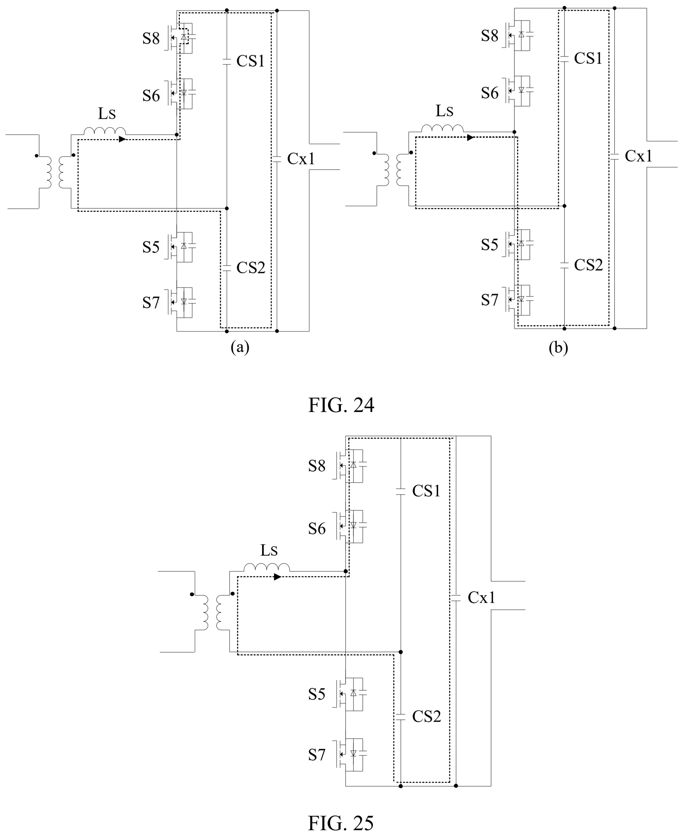

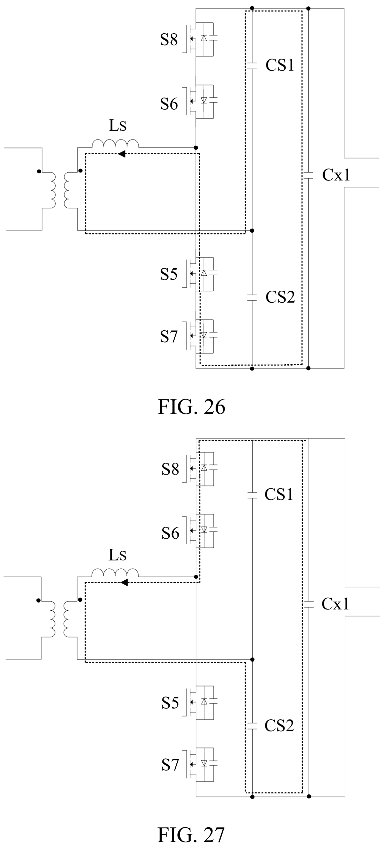

FIG. 24 and FIG. 26 are schematics of yet another current loop when an alternating current voltage is in a P region according to an embodiment of this application. A current direction shown in FIG. 24 (including (a) in FIG. 24 and (b) in FIG. 24) is opposite to a current direction shown in FIG. 26. FIG. 25 and FIG. 27 are schematics of yet another current loop when an alternating current voltage is in an O region according to an embodiment of this application. A current direction shown in FIG. 25 is opposite to a current direction shown in FIG. 27.

Refer to FIG. 24 and FIG. 26. S5, S7, and S6 are turned on, and S8 is turned off. The current passes through S5, S7, Cx1, and Cs1 to form a bidirectional current loop, and the current passes through S6, the freewheeling diode on S8, Cx1, and Cs2 to form a unidirectional current loop. Refer to FIG. 25 and FIG. 27. S8 and S6 are turned on, and S7 and S5 are turned off. The current passes through S6, S8, Cx1, and Cs2 to form a bidirectional current loop.

In this embodiment of this application, it is assumed that a left-to-right direction of the current shown in the figure is a positive direction, and a right-to-left direction is a negative direction.

### A. The current of the inductor Ls is positive

If the current loop shown in FIG. 24 is switched to the current loop shown in FIG. 25, because a current direction of the inductor Ls is the same as a current direction of the unidirectional current path (that is, the current path shown in (a) in FIG. 24), in response to the change of the absolute value of the alternating current voltage output by the filter circuit 332 from being greater than the absolute value of the preset voltage threshold to being less than or equal to the absolute value of the preset voltage threshold, the controller 340 first simultaneously turns off two switching transistors in the bidirectional current path in the first working mode, that is, S5 and S7, and after S5 and S7 are completely turned off, turns on a switching transistor that is not turned on in the unidirectional current path, that is, S8.

Specifically, the controller 340 first simultaneously turns off S5 and S7, so that only S6 is in an on state, and the current of the inductor Ls passes through S6, the freewheeling diode on S8, Cx1, and Cs2 to form a freewheeling path. After S5 and S7 are completely turned off, the controller 340 turns on S8, so that S6 and S8 are in an on state, and the current of the inductor Ls passes through S6, S8, Cx1, and Cs2 to form a freewheeling path. In this process, the controller 340 performs an action twice. Compared with a solution in which a direction of the inductor current is not determined, a quantity of actions of the controller 340 is reduced.

### B. The inductor current is negative

If the current loop shown in FIG. 26 is switched to the current loop shown in FIG. 27, because a current direction of the inductor Ls is opposite to a current direction of the unidirectional current path (that is, the current path shown in (a) in FIG. 24), for an action sequence of switching the switching transistors by the controller 340, refer to the foregoing content related to FIG. 15 and FIG. 16 in the case of switching from the P region to the O region. Details are not described again.

(2) In the first working mode, the two switching transistors included in the upper half bridge arm and one switching transistor included in the lower half bridge arm are turned on, and the other switching transistor included in the lower half bridge arm is turned off; and in the second working mode, the two switching transistors included in the upper half bridge arm are turned off, and the two switching transistors included in the lower half bridge arm are turned on.

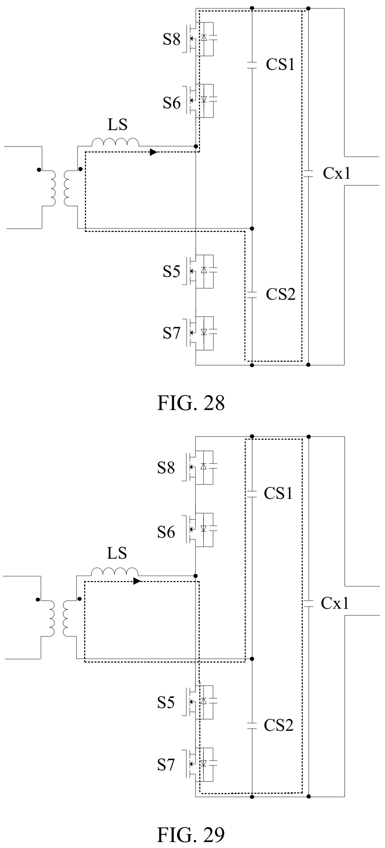

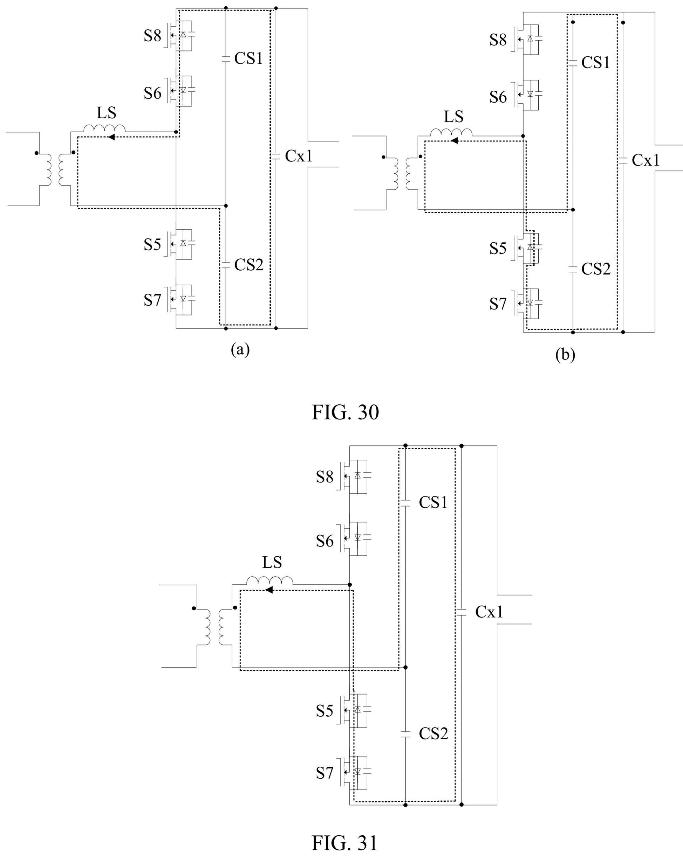

FIG. 28 and FIG. 30 are schematics of yet another current loop when an alternating current voltage is in a P region according to an embodiment of this application. A current direction shown in FIG. 28 is opposite to a current direction shown in FIG. 30 (including (a) in FIG. 30 and (b) in FIG. 30). FIG. 29 and FIG. 31 are schematics of yet another current loop when an alternating current voltage is in an O region according to an embodiment of this application. A current direction shown in FIG. 29 is opposite to a current direction shown in FIG. 31.

Refer to FIG. 28 and FIG. 30. S8, S6, and S7 are turned on, and S5 is turned off. The current passes through S6, S8, Cx1, and Cs2 to form a bidirectional current loop, and the current passes through the freewheeling diode on S5, S7, Cx1, and Cs1 to form a unidirectional current loop. Refer to FIG. 29 and FIG. 31. S8 and S6 are turned off, and S7 and S5 are turned on. The current passes through S5, S7, Cx1, and Cs1 to form a bidirectional current loop.

### A. The inductor current is positive

If the current loop shown in FIG. 28 is switched to the current loop shown in FIG. 29, a direction of the current of the inductor Ls is opposite to a direction of a current in the unidirectional current path (that is, the current path shown in (a) in FIG. 30). For an action sequence of switching the switching transistors by the controller 340, refer to the foregoing content related to FIG. 13 and FIG. 14 in the case of switching from the P region to the O region. Details are not described again.

### B. The inductor current is negative

If the current loop shown in FIG. 30 is switched to the current loop shown in FIG. 31, because a direction of the current of the inductor Ls is the same as a direction of a current in the unidirectional current path, in response to the change of the absolute value of the alternating current voltage output by the filter circuit 332 from being greater than the absolute value of the preset voltage threshold to being less than or equal to the absolute value of the preset voltage threshold, the controller 340 first simultaneously turns off S6 and S8, and then turns on S5 after S6 and S8 are completely turned off. For brevity, a freewheeling path of the inductor current in a switching process is not described in detail.

### Case 2: The alternating current voltage enters the O region from the N region

(1) In the first working mode, the two switching transistors included in the lower half bridge arm and one switching transistor included in the upper half bridge arm are turned on, and the other switching transistor included in the upper half bridge arm is turned off; and in the second working mode, the two switching transistors included in the upper half bridge arm are turned on, and the two switching transistors included in the lower half bridge arm are turned off.

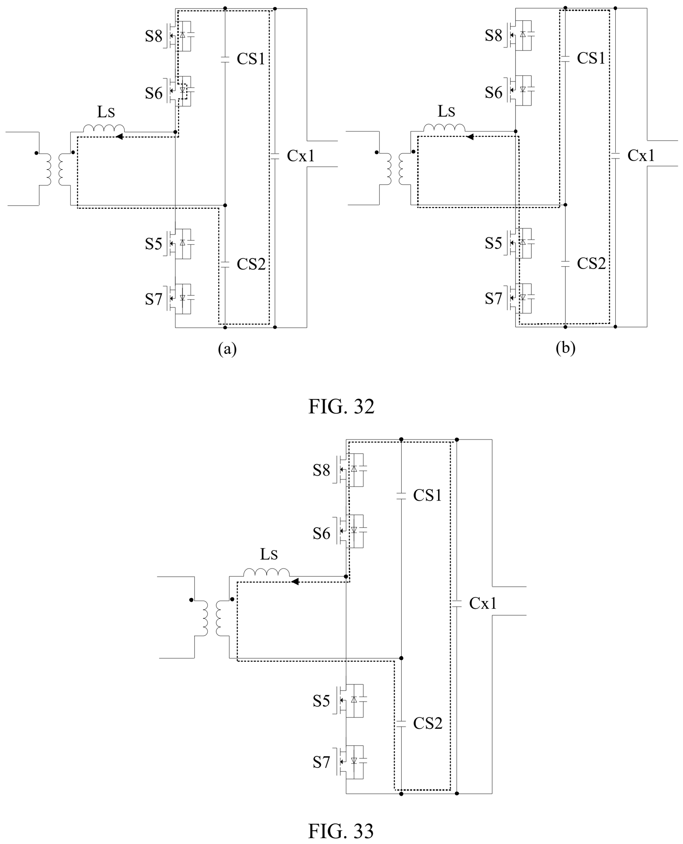

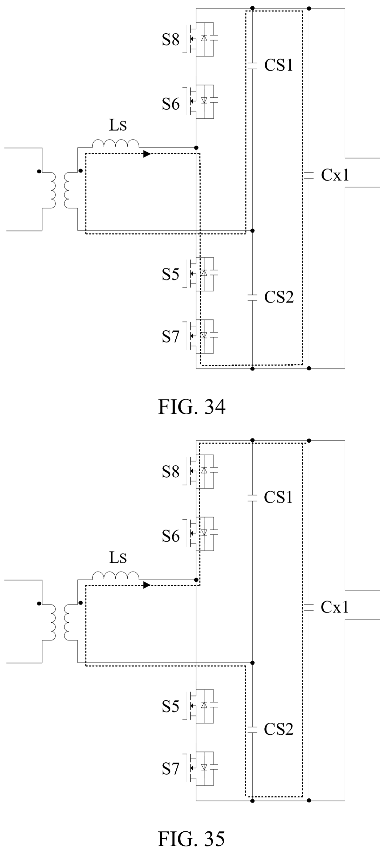

FIG. 32 and FIG. 34 are schematics of yet another current loop when an alternating current voltage is in an N region according to an embodiment of this application. A current direction shown in FIG. 32 is opposite to a current direction shown in FIG. 34. FIG. 33 and FIG. 35 are schematics of yet another current loop when an alternating current voltage is in an O region according to an embodiment of this application. A current direction shown in FIG. 33 is opposite to a current direction shown in FIG. 35.

Refer to FIG. 32 and FIG. 34. S5, S7, and S8 are turned on, and S6 is turned off. The current passes through S5, S7, Cx1, and Cs1 to form a bidirectional current loop, and the current passes through the freewheeling diode on S6, S8, Cx1, and Cs2 to form a unidirectional current loop. Refer to FIG. 33 and FIG. 35. S8 and S6 are turned on, and S7 and S5 are turned off. The current passes through S6, S8, Cx1, and Cs2 to form a bidirectional current loop.

### A. The inductor current is positive

If the current loop shown in FIG. 34 is switched to the current loop shown in FIG. 35, a direction of the current of the inductor Ls is opposite to a direction of a current in the unidirectional current path (that is, the current path shown in (a) in FIG. 32). For a logical action of switching the switching transistors by the controller 340, refer to the foregoing content related to FIG. 19 and FIG. 20 in the case of switching from the N region to the O region. Details are not described again.

### B. The inductor current is negative

If the current loop shown in FIG. 32 is switched to the current loop shown in FIG. 33, a direction of the current of the inductor Ls is the same as a direction of a current in the unidirectional current path (that is, the current path shown in (a) in FIG. 32), in response to the change of the absolute value of the alternating current voltage output by the filter circuit 332 from being greater than the absolute value of the preset voltage threshold to being less than or equal to the absolute value of the preset voltage threshold, the controller 340 first simultaneously turns off S5 and S7, and turns on S6 after S5 and S7 are completely turned off.

(2) In the first working mode, the two switching transistors included in the upper half bridge arm and one switching transistor included in the lower half bridge arm are turned on, and the other switching transistor included in the lower half bridge arm is turned off; and in the second working mode, the two switching transistors included in the upper half bridge arm are turned off, and the two switching transistors included in the lower half bridge arm are turned on.

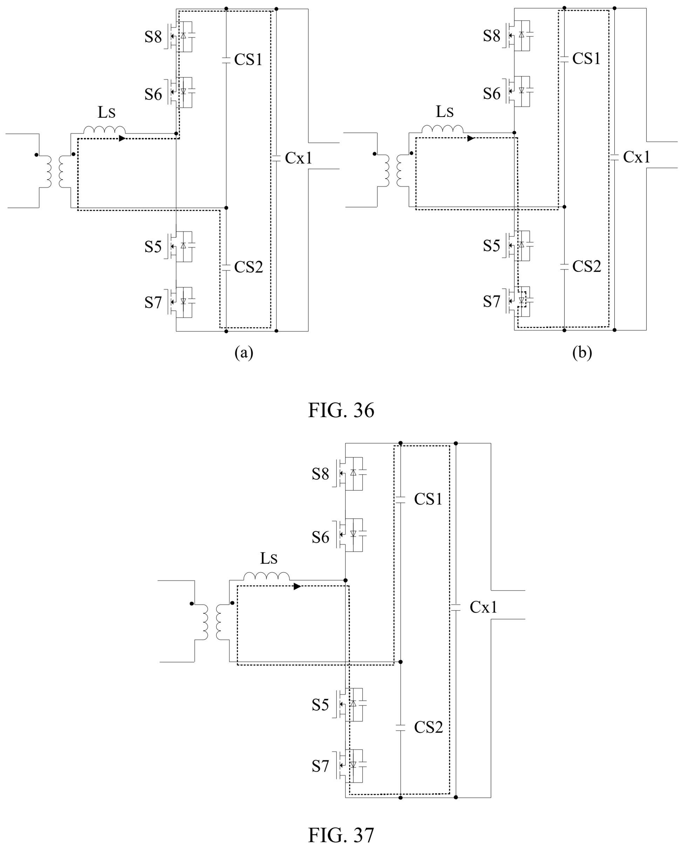

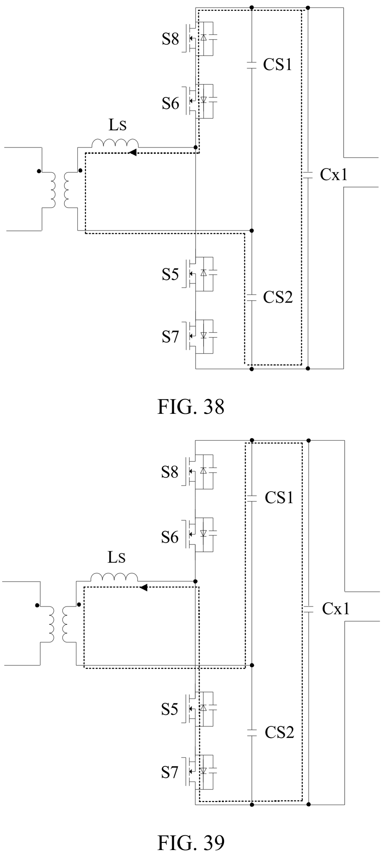

FIG. 36 and FIG. 38 are schematics of yet another current loop when an alternating current voltage is in an N region according to an embodiment of this application. A current direction shown in FIG. 36 is opposite to a current direction shown in FIG. 38. FIG. 37 and FIG. 39 are schematics of yet another current loop when an alternating current voltage is in an O region according to an embodiment of this application. A current direction shown in FIG. 37 is opposite to a current direction shown in FIG. 39.

Refer to FIG. 36 and FIG. 38. S8, S6, and S5 are turned on, and S7 is turned off. The current passes through S6, S8, Cx1, and Cs2 to form a bidirectional current loop, and the current passes through S5, the freewheeling diode on S7, Cx1, and Cs1 to form a unidirectional current loop. Refer to FIG. 37 and FIG. 39. S8 and S6 are turned off, and S7 and S5 are turned on. The current passes through S5, S7, Cx1, and Cs1 to form a bidirectional current loop.

### A. The inductor current is positive

If the current loop shown in FIG. 36 is switched to the current loop shown in FIG. 37, a direction of the current of the inductor Ls is the same as a direction of a current in the unidirectional current path (that is, the current path shown in (b) in FIG. 36), in response to the change of the absolute value of the alternating current voltage output by the filter circuit 332 from being greater than the absolute value of the preset voltage threshold to being less than or equal to the absolute value of the preset voltage threshold, the controller 340 first simultaneously turns off S6 and S8, and turns on S7 after S6 and S8 are completely turned off.

### B. The inductor current is negative

If the current loop shown in FIG. 38 is switched to the current loop shown in FIG. 39, a direction the current of the inductor Ls is opposite to a direction of a current in the unidirectional current path (that is, the current path shown in (b) in FIG. 36). For a logical action of switching the switching transistors by the controller 340, refer to the foregoing content related to FIG. 17 and FIG. 18 in the case of switching from the N region to the O region. Details are not described again.

In this embodiment of this application, when one of the three switching transistors that are turned on in the first working mode is the same as one target switching transistor that is turned on in the second working mode to be switched to, the controller switches states of the switching transistors with reference to the direction of the current flowing through the secondary-side winding of the transformer. Particularly, when the direction of the current flowing through the secondary-side winding of the transformer is the same as the direction of the current in the unidirectional current path, a quantity of actions of the controller is reduced.

On this basis, related content of the alternating current voltage entering the O region from the P region/N region is described above, and the following describes content of the alternating current voltage entering the P region/N region from the O region.

In an embodiment, the controller 340 is further configured to: in response to a change of the absolute value of the alternating current voltage output by the filter circuit 332 from being less than or equal to the absolute value of the preset voltage threshold to being greater than the absolute value of the preset voltage threshold, control the inverter to switch from the second working mode to the first working mode, to enable at least one and at most three of the four switching transistors included in the bridge arm to be turned on.

For example, it is assumed that the preset positive voltage threshold is 20 V, and the preset negative voltage threshold is -20 V. If the filter circuit 332 changes from outputting a voltage of 10 V to outputting a voltage of 50 V, the controller 340 controls the inverter to switch from the second working mode to the first working mode. In a process of switching a working mode of the inverter, the controller controls at least one and at most three of the four switching transistors included in the bridge arm to be turned on, so that the current of the secondary-side winding of the transformer is enabled to have a freewheeling path at any moment, and a case in which secondary-side switching transistors are directly connected is avoided.

In this embodiment of this application, in response to the change of the absolute value of the alternating current voltage output by the filter circuit from being less than or equal to the absolute value of the preset voltage threshold to being greater than the absolute value of the preset voltage threshold, the controller controls the inverter to switch from the second working mode to the first working mode, to enable at least one of the four switching transistors included in the bridge arm to be turned on, so that the current of the secondary-side winding of the transformer has a freewheeling path at any moment. In addition, at most three of the four switching transistors included in the bridge arm are enabled to be turned on, so that a case in which secondary-side switching transistors are directly connected does not occur, and a risk of damage to the switching transistors caused by inaccurate determining of a polarity of the alternating current voltage is eliminated.

In an embodiment, the controller 340 is configured to: in response to the change of the absolute value of the alternating current voltage output by the filter circuit 332 from being less than or equal to the absolute value of the preset voltage threshold to being greater than the absolute value of the preset voltage threshold, when two switching transistors that are turned on in the second working mode are the same as two of three target switching transistors that are turned on in the first working mode to be switched to, turn on a switching transistor other than the two turned-on switching transistors in the target switching transistors, to control the inverter to switch from the second working mode to the first working mode.

### Case 3: The alternating current voltage enters the P region from the O region

(1) The second working mode in which the two switching transistors included in the upper half bridge arm are turned on, and the two switching transistors included in the lower half bridge arm are turned off is switched to the first working mode in which the two switching transistors included in the upper half bridge arm and one switching transistor included in the lower half bridge arm are turned on, and the other switching transistor included in the lower half bridge arm is turned off.

Refer to FIG. 5 and FIG. 6. The switching transistors that are turned on in the second working mode are S6 and S8, and the target switching transistors that are turned on in the first working mode to be switched to are S6, S7, and S8. The inverter switches from the second working mode to the first working mode. Because the two switching transistors (that is, S6 and S8) that are turned on in the second working mode are the same as the target switching transistors, in response to the change of the absolute value of the alternating current voltage output by the filter circuit 332 from being less than or equal to the absolute value of the preset voltage threshold to being greater than the absolute value of the preset voltage threshold, the controller 340 only needs to directly turn on S7.

In this embodiment of this application, before the controller 340 turns on S7, the current may pass through S6, S8, Cx1, and Cs2 to form a loop. Because S7 is turned on, the current may alternatively pass through Cs1, Cx1, S7, and the freewheeling diode on S5 to form a loop. This is equivalent to that the inductor current has an additional freewheeling path, and the freewheeling path of the inductor current is not affected.

(2) The second working mode in which the two switching transistors included in the upper half bridge arm are turned off, and the two switching transistors included in the lower half bridge arm are turned on is switched to the first working mode in which the two switching transistors included in the lower half bridge arm and one switching transistor included in the upper half bridge arm are turned on, and the other switching transistor included in the upper half bridge arm is turned off.

Refer to FIG. 7 and FIG. 8. The switching transistors that are turned on in the second working mode are S5 and S7, and the target switching transistors that are turned on in the first working mode to be switched to are S5, S6, and S7. The inverter switches from the second working mode to the first working mode. Because the two switching transistors (that is, S5 and S7) that are turned on in the second working mode are the same as the target switching transistors, in response to the change of the absolute value of the alternating current voltage output by the filter circuit 332 from being less than or equal to the absolute value of the preset voltage threshold to being greater than the absolute value of the preset voltage threshold, the controller 340 only needs to directly turn on S6. A reason is similar to that in (1) in case 3. Details are not described again.

### Case 4: The alternating current voltage enters the N region from the O region

(1) The second working mode in which the two switching transistors included in the upper half bridge arm are turned on, and the two switching transistors included in the lower half bridge arm are turned off is switched to the first working mode in which the two switching transistors included in the upper half bridge arm and one switching transistor included in the lower half bridge arm are turned on, and the other switching transistor included in the lower half bridge arm is turned off.

Refer to FIG. 9 and FIG. 10. The switching transistors that are turned on in the second working mode are S6 and S8, and the target switching transistors that are turned on in the first working mode to be switched to are S5, S6, and S8. The inverter switches from the second working mode to the first working mode. Because the two switching transistors (that is, S6 and S8) that are turned on in the second working mode are the same as the target switching transistors, in response to the change of the absolute value of the alternating current voltage output by the filter circuit 332 from being less than or equal to the absolute value of the preset voltage threshold to being greater than the absolute value of the preset voltage threshold, the controller 340 only needs to directly turn on S5. A reason is similar to that in (1) in case 3. Details are not described again.

(2) The second working mode in which the two switching transistors included in the upper half bridge arm are turned off, and the two switching transistors included in the lower half bridge arm are turned on is switched to the first working mode in which the two switching transistors included in the lower half bridge arm and one switching transistor included in the upper half bridge arm are turned on, and the other switching transistor included in the upper half bridge arm is turned off.

Refer to FIG. 11 and FIG. 12. The switching transistors that are turned on in the second working mode are S5 and S7, and the target switching transistors that are turned on in the first working mode to be switched to are S5, S7, and S8. The inverter switches from the second working mode to the first working mode. Because the two switching transistors (that is, S5 and S7) that are turned on in the second working mode are the same as the target switching transistors, in response to the change of the absolute value of the alternating current voltage output by the filter circuit 332 from being less than or equal to the absolute value of the preset voltage threshold to being greater than the absolute value of the preset voltage threshold, the controller 340 only needs to directly turn on S8. A reason is similar to that in (1) in case 3. Details are not described again.

In this embodiment of this application, because the two switching transistors that are turned on in the second working mode are the same as two of the three target switching transistors that are turned on in the first working mode to be switched to, the controller turns on a switching transistor other than the two turned-on switching transistors in the target switching transistors. Before and after the controller switches the switching transistor, the current of the secondary-side winding of the transformer has an additional freewheeling path, and there is always a freewheeling path. In addition, in this embodiment of this application, the controller turns on the switching transistor other than the two turned-on switching transistors in the target switching transistors, and a quantity of turned-on switching transistors changes from two to three, so that a case in which secondary-side switching transistors are directly connected does not occur, and a risk of damage to the switching transistors caused by inaccurate determining of a polarity of the alternating current voltage is eliminated.

In an embodiment, the controller 340 is configured to: in response to the change of the absolute value of the alternating current voltage output by the filter circuit 332 from being less than or equal to the absolute value of the preset voltage threshold to being greater than the absolute value of the preset voltage threshold, when only one of two switching transistors that are turned on in the second working mode is the same as one of three target switching transistors that are turned on in the first working mode to be switched to, first turn on a switching transistor whose freewheeling direction in a bidirectional current path of the half-bridge circuit 331 in the first working mode to be switched to is the same as a current direction of a unidirectional current path of the half-bridge circuit 331 in the first working mode, then turn off a switching transistor that is in the unidirectional current path and that does not belong to the target switching transistors, and then turn on a switching transistor that is not turned on in the bidirectional current path, to control the inverter to switch from the second working mode to the first working mode.

### Case 3: The alternating current voltage enters the P region from the O region

(1) The second working mode in which the two switching transistors included in the upper half bridge arm are turned off, and the two switching transistors included in the lower half bridge arm are turned on is switched to the first working mode in which the two switching transistors included in the upper half bridge arm and one switching transistor included in the lower half bridge arm are turned on, and the other switching transistor included in the lower half bridge arm is turned off.

Refer to FIG. 13 and FIG. 14. If the current path shown in FIG. 14 is switched to the current path shown in FIG. 13, in response to the change of the absolute value of the alternating current voltage output by the filter circuit 332 from being less than or equal to the absolute value of the preset voltage threshold to being greater than the absolute value of the preset voltage threshold, the controller 340 first turns on a switching transistor whose freewheeling direction in the bidirectional current path in the first working mode is the same as the current direction of the unidirectional current path, that is, S6, then turns off a switching transistor that is in the unidirectional current path in the first working mode and that does not belong to the target switching transistors, that is, S5, and then turns on a switching transistor that is not turned on in the bidirectional current path in the first working mode, that is, S8.

In this embodiment of this application, the controller 340 first turns on S6, so that S5, S6, and S7 are in an on state. The inductor current passes through Cs1, Cx1, S7, and S5 to form a freewheeling path, and the current may alternatively pass through S6, the freewheeling diode on S8, Cx1, and Cs2 to form a freewheeling path. After S6 is completely turned on, S5 is turned off, so that S6 and S7 are in an on state. The inductor current passes through S6, the freewheeling diode on S8, Cx1, and Cs2 to form a freewheeling path, and the inductor current may alternatively pass through Cs1, Cx1, S7, and the freewheeling diode on S5 form a freewheeling path. After S5 is completely turned off, the controller 340 turns on S8, so that S6, S7, and S8 are in an on state. A freewheeling path of the inductor current is shown in FIG. 13.

(2) The second working mode in which the two switching transistors included in the upper half bridge arm are turned on, and the two switching transistors included in the lower half bridge arm are turned off is switched to the first working mode in which the two switching transistors included in the lower half bridge arm and one switching transistor included in the upper half bridge arm are turned on, and the other switching transistor included in the upper half bridge arm is turned off.

Refer to FIG. 15 and FIG. 16. If the current path shown in FIG. 16 is switched to the current path shown in FIG. 15, in response to the change of the absolute value of the alternating current voltage output by the filter circuit 332 from being less than or equal to the absolute value of the preset voltage threshold to being greater than the absolute value of the preset voltage threshold, the controller 340 first turns on S7, then turns off S8, and finally turns on S5.

### Case 4: The alternating current voltage enters the N region from the O region

(1) The second working mode in which the two switching transistors included in the upper half bridge arm are turned off, and the two switching transistors included in the lower half bridge arm are turned on is switched to the first working mode in which the two switching transistors included in the upper half bridge arm and one switching transistor included in the lower half bridge arm are turned on, and the other switching transistor included in the lower half bridge arm is turned off.
   Refer to FIG. 17 and FIG. 18. If the current path shown in FIG. 18 is switched to the current path shown in FIG. 17, in response to the change of the absolute value of the alternating current voltage output by the filter circuit 332 from being less than or equal to the absolute value of the preset voltage threshold to being greater than the absolute value of the preset voltage threshold, the controller 340 first turns on S8, then turns off S7, and finally turns on S6.
(2) The second working mode in which the two switching transistors included in the upper half bridge arm are turned on, and the two switching transistors included in the lower half bridge arm are turned off is switched to the first working mode in which the two switching transistors included in the lower half bridge arm and one switching transistor included in the upper half bridge arm are turned on, and the other switching transistor included in the upper half bridge arm is turned off.

Refer to FIG. 19 and FIG. 20. If the current path shown in FIG. 20 is switched to the current path shown in FIG. 19, in response to the change of the absolute value of the alternating current voltage output by the filter circuit 332 from being less than or equal to the absolute value of the preset voltage threshold to being greater than the absolute value of the preset voltage threshold, the controller 340 first turns on S5, then turns off S6, and finally turns on S7.

In this embodiment of this application, when one of the two switching transistors that are turned on in the second working mode is the same as the target switching transistors that are turned on in the first working mode to be switched to, the controller turns on or off the switching transistors step by step. In a process of switching states of the switching transistors by the controller, because at least one switching transistor is in an on state, the current of the secondary-side winding of the transformer always has a freewheeling path. In addition, in the process of switching the states of the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

A process in which the controller 340 controls the inverter to switch from the second working mode to the first working mode is described below with reference to a direction of a current of the secondary-side winding of the transformer.

In an embodiment, the controller 340 is configured to: in response to the change of the absolute value of the alternating current voltage output by the filter circuit 332 from being less than or equal to the absolute value of the preset voltage threshold to being greater than the absolute value of the preset voltage threshold, when only one of two switching transistors that are turned on in the second working mode is the same as one of three target switching transistors that are turned on in the first working mode to be switched to, and a direction of the current flowing through the secondary-side winding of the transformer is the same as a direction of a current in the unidirectional current path in the first working mode, first turn off a switching transistor that is in the unidirectional current path of the half-bridge circuit 331 in the first working mode and that does not belong to the target switching transistors, and then simultaneously turn on switching transistors that are not turned on in the bidirectional current path of the half-bridge circuit 331 in the first working mode, to control the inverter to switch from the second working mode to the first working mode.

In an embodiment, the controller 340 is configured to: in response to the change of the absolute value of the alternating current voltage output by the filter circuit 332 from being less than or equal to the absolute value of the preset voltage threshold to being greater than the absolute value of the preset voltage threshold, when only one of two switching transistors that are turned on in the second working mode is the same as one of three target switching transistors that are turned on in the first working mode to be switched to, and a direction of the current flowing through the secondary-side winding of the transformer is opposite to a direction of a current in the unidirectional current path in the first working mode, first turn on a switching transistor whose freewheeling direction in the bidirectional current path is the same as the current direction of the unidirectional current path, then turn off a switching transistor that is in the unidirectional current path and that does not belong to the target switching transistors, and then turn on a switching transistor that is not turned on in the bidirectional current path, to control the inverter to switch from the second working mode to the first working mode.

In this embodiment of this application, in the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

The following uses an example in which the transformer is connected in series with the inductor Ls for description in different cases.

### Case 3: The alternating current voltage enters the P region from the O region

(1) The second working mode in which the two switching transistors included in the upper half bridge arm are turned on, and the two switching transistors included in the lower half bridge arm are turned off is switched to the first working mode in which the two switching transistors included in the lower half bridge arm and one switching transistor included in the upper half bridge arm are turned on, and the other switching transistor included in the upper half bridge arm is turned off.

### A. When the inductor current is positive

Refer to FIG. 24 and FIG. 25. If the current path shown in FIG. 25 is switched to the current path shown in 24, where in this case, a direction of the inductor current is the same as a direction of a current in the unidirectional current path (that is, the current path shown in (a) in FIG. 24) in the first working mode, in response to the change of the absolute value of the alternating current voltage output by the filter circuit 332 from being less than or equal to the absolute value of the preset voltage threshold to being greater than the absolute value of the preset voltage threshold, the controller 340 first turns off a switching transistor that is in the unidirectional current path and that does not belong to the target switching transistors, that is, S8, and then turns on switching transistors that are not turned on in the bidirectional current path in the first working mode, that is, S5 and S7.

In this embodiment of this application, the controller 340 first turns off S8. In this case, only S6 is in an on state, and the inductor current passes through S6, the freewheeling diode on S8, Cx1, and Cs2 to form a freewheeling path. After S8 is completely turned off, S5 and S7 are turned on. In this case, S5, S6, and S7 are in an on state, and one of the freewheeling paths of the inductor current is shown in FIG. 24.

In this embodiment of this application, if the direction of the inductor current is the same as the direction of the current in the unidirectional current path, the controller 340 first turns off S8. After S8 is completely turned off, S5 and S7 are simultaneously turned on. In this process, the controller 340 performs an action twice. Compared with a solution in which a direction of the inductor current is not determined, a quantity of actions of the controller 340 is reduced.

### B. When the inductor current is negative

If the current loop shown in FIG. 27 is switched to the current loop shown in FIG. 26, a direction of the inductor current is opposite to a direction of a current in the unidirectional current path (that is, the current path shown in (a) in FIG. 24) in the first working mode. For a logical action of switching the switching transistors by the controller 340, refer to the foregoing content related to FIG. 15 and FIG. 16 in the case of switching from the O region to the P region. Details are not described again.

(2) The second working mode in which the two switching transistors included in the upper half bridge arm are turned off, and the two switching transistors included in the lower half bridge arm are turned on is switched to the first working mode in which the two switching transistors included in the upper half bridge arm and one switching transistor included in the lower half bridge arm are turned on, and the other switching transistor included in the lower half bridge arm is turned off.

### A. When the inductor current is positive

If the current path shown in FIG. 29 is switched to the current path shown in 28, for a logical action of switching the switching transistors by the controller 340, refer to the foregoing content related to FIG. 13 and FIG. 14 in the case of switching from the O region to the P region. Details are not described again.

### B. When the inductor current is negative

Refer to FIG. 30 and FIG. 31. If the current path shown in FIG. 31 is switched to the current path shown in 30, where in this case, a direction of the inductor current is the same as a direction of a current in the unidirectional current path (that is, the current path shown in (b) in FIG. 30) in the first working mode, in response to the change of the absolute value of the alternating current voltage output by the filter circuit 332 from being less than or equal to the absolute value of the preset voltage threshold to being greater than the absolute value of the preset voltage threshold, the controller 340 first turns off S5, and then turns on S6 and S8.

### Case 4: The alternating current voltage enters the N region from the O region

(1) The second working mode in which the two switching transistors included in the upper half bridge arm are turned on, and the two switching transistors included in the lower half bridge arm are turned off is switched to the first working mode in which the two switching transistors included in the lower half bridge arm and one switching transistor included in the upper half bridge arm are turned on, and the other switching transistor included in the upper half bridge arm is turned off.

### A. When the inductor current is positive

Refer to FIG. 32 and FIG. 33. If the current path shown in FIG. 33 is switched to the current path shown in 32, for a logical action of switching the switching transistors by the controller 340, refer to the foregoing content related to FIG. 19 and FIG. 20 in the case of switching from O region to the N region. Details are not described again.

### B. When the inductor current is negative

Refer to FIG. 34 and FIG. 35. If the current path shown in FIG. 35 is switched to the current path shown in 34, where in this case, a direction of the inductor current is the same as a direction of a current in the unidirectional current path (that is, the current path shown in (a) in FIG. 32) in the first working mode, in response to the change of the absolute value of the alternating current voltage output by the filter circuit 332 from being less than or equal to the absolute value of the preset voltage threshold to being greater than the absolute value of the preset voltage threshold, the controller 340 first turns off S6, and then simultaneously turns on S5 and S7.

(2) The second working mode in which the two switching transistors included in the upper half bridge arm are turned off, and the two switching transistors included in the lower half bridge arm are turned on is switched to the first working mode in which the two switching transistors included in the upper half bridge arm and one switching transistor included in the lower half bridge arm are turned on, and the other switching transistor included in the lower half bridge arm is turned off.

### A. When the inductor current is positive

Refer to FIG. 36 and FIG. 37. If the current path shown in FIG. 37 is switched to the current path shown in 36, where in this case, a direction of the inductor current is the same as a direction of a current in the unidirectional current path (that is, the current path shown in (b) in FIG. 36) in the first working mode, in response to the change of the absolute value of the alternating current voltage output by the filter circuit 332 from being less than or equal to the absolute value of the preset voltage threshold to being greater than the absolute value of the preset voltage threshold, the controller 340 first turns off S7, and then simultaneously turns on S6 and S8.

### B. When the inductor current is negative

Refer to FIG. 38 and FIG. 39. If the current path shown in FIG. 39 is switched to the current path shown in 38, for a logical action of switching the switching transistors by the controller 340, refer to the foregoing content related to FIG. 17 and FIG. 18 in the case of switching from the O region to the N region. Details are not described again.

In this embodiment of this application, when one of the two switching transistors that are turned on in the second working mode is the same as the target switching transistors that are turned on in the first working mode to be switched to, the controller switches states of the switching transistors with reference to the direction of the current of the secondary-side winding of the transformer. Particularly, when the direction of the current flowing through the secondary-side winding of the transformer is the same as the direction of the current in the unidirectional current path in the first working mode to be switched to, a quantity of actions of the controller is reduced.

On this basis, that the alternating current voltage is switched between the P region/N region and the O region is described above. In some cases, when the alternating current voltage is in the P region/N region and a voltage peak value is small, a polarity of the alternating current voltage is reversed due to some interference, so that the inverter switches between the positive voltage working mode and the negative voltage working mode that are included in the first working mode.

In an embodiment, the controller 340 is configured to: in response to a change of the alternating current voltage output by the filter circuit 332 from being greater than the preset positive voltage threshold to being less than the preset negative voltage threshold, control the inverter to switch from the positive voltage working mode of the first working mode to the negative voltage working mode of the first working mode, to enable at least one and at most three of the four switching transistors included in the bridge arm to be turned on.

The controller 340 is further configured to: in response to a change of the alternating current voltage output by the filter circuit 332 from being less than the preset negative voltage threshold to being greater than the preset positive voltage threshold, control the inverter 340 to switch from the negative voltage working mode of the first working mode to the positive voltage working mode of the first working mode, to enable at least one and at most three of the four switching transistors included in the bridge arm to be turned on.

For example, it is assumed that the preset positive voltage threshold is 20 V, and the preset negative voltage threshold is -20 V. If the filter circuit 332 changes from outputting a voltage of 10 V to outputting a voltage of -10 V, the controller 340 controls the inverter to switch from the positive voltage working mode of the first working mode to the negative voltage working mode of the first working mode. In a process of switching a working mode of the inverter, the controller controls at least one and at most three of the four switching transistors included in the bridge arm to be turned on, so that the current of the secondary-side winding of the transformer is enabled to have a freewheeling path at any moment, and a case in which secondary-side switching transistors are directly connected is avoided.

Similarly, if the filter circuit 332 changes from outputting a voltage of -10 V to outputting a voltage of 10 V, the controller 340 controls the inverter to switch from the negative voltage working mode of the first working mode to the positive voltage working mode of the first working mode. In a process of switching a working mode of the inverter, the controller controls at least one and at most three of the four switching transistors included in the bridge arm to be turned on, so that the current of the secondary-side winding of the transformer is enabled to have a freewheeling path at any moment, and a case in which secondary-side switching transistors are directly connected is avoided.

In this embodiment of this application, in response to the change of the alternating current voltage output by the filter circuit from being greater than the preset positive voltage threshold to being less than the preset negative voltage threshold, the controller controls the inverter to switch from the positive voltage working mode to the negative voltage working mode; or in response to the change of the alternating current voltage output by the filter circuit from being less than the preset negative voltage threshold to being greater than the preset positive voltage threshold, the controller controls the inverter to switch from the negative voltage working mode to the positive voltage working mode. In this way, at least one of the four switching transistors included in the bridge arm is enabled to be turned on, so that the current of the secondary-side winding of the transformer always has a freewheeling path at any moment. In addition, at most three of the four switching transistors included in the bridge arm are controlled to be turned on, so that a case in which secondary-side switching transistors are directly connected does not occur, and a risk of damage to the switching transistors caused by inaccurate determining of a polarity of the alternating current voltage is eliminated.

In an embodiment, the controller 340 is configured to: in response to the change of the alternating current voltage output by the filter circuit 332 from being greater than the preset positive voltage threshold to being less than the preset negative voltage threshold, when a path of a bidirectional current path of the half-bridge circuit in the positive voltage working mode is the same as a path of a bidirectional current path of the half-bridge circuit in the negative voltage working mode to be switched to, first turn off a switching transistor that is in the three switching transistors that are turned on in the positive voltage working mode and that does not belong to target switching transistors, and then turn on a switching transistor that is not turned on in the target switching transistors, to control the inverter to switch from the positive voltage working mode to the negative voltage working mode.

In an embodiment, the controller 340 is configured to: in response to the change of the alternating current voltage output by the filter circuit 332 from being greater than the preset positive voltage threshold to being less than the preset negative voltage threshold, when a path of a bidirectional current path of the half-bridge circuit 331 in the positive voltage working mode is different from a path of a bidirectional current path of the half-bridge circuit 331 in the negative voltage working mode to be switched to, first turn off a switching transistor whose freewheeling direction in the bidirectional current path of the half-bridge circuit 331 in the positive voltage working mode is the same as the direction of the current flowing through the secondary-side winding of the transformer, then turn on a switching transistor that is not turned on in a unidirectional current path of the half-bridge circuit 331 in the positive voltage working mode, then turn off another turned-on switching transistor in the bidirectional current path of the half-bridge circuit 331 in the positive voltage working mode, and finally turn on the switching transistor whose freewheeling direction in the bidirectional current path of the half-bridge circuit 331 in the positive voltage working mode is the same as the direction of the current flowing through the secondary-side winding of the transformer, to control the inverter to switch from the positive voltage working mode to the negative voltage working mode, where the target switching transistors are switching transistors that are turned on in the negative voltage working mode.

In the bidirectional current path, a current flowing through the secondary-side winding of the transformer has two directions, and the two switching transistors of the upper half bridge arm or the lower half bridge arm through which the current flows are both turned on. In the unidirectional current path, a current flowing through the secondary-side winding has only one direction, and only one of the two switching transistors of the upper half bridge arm or the lower half bridge arm through which the current flows is turned on.

In this embodiment of this application, the controller 340 may switch the states of the switching transistors based on whether paths of bidirectional circuit paths in two working modes: an initial working mode and a target working mode are consistent. For details, refer to the following description. In this embodiment of this application, the initial working mode is the positive voltage working mode, and the target working mode is the negative voltage working mode. In other words, in this embodiment of this application, the controller 340 controls the inverter to switch from the positive voltage working mode to the negative voltage working mode.

### Case 5: The alternating current voltage is switched from the P region to the N region

(1) The initial working mode in which the two switching transistors included in the upper half bridge arm and one switching transistor included in the lower half bridge arm are turned on, and the other switching transistor included in the lower half bridge arm is turned off is switched to the target working mode in which the two switching transistors included in the upper half bridge arm are turned on, and states of the switching transistors included in the lower half bridge arm are opposite to those of the switching transistors in the initial working mode.

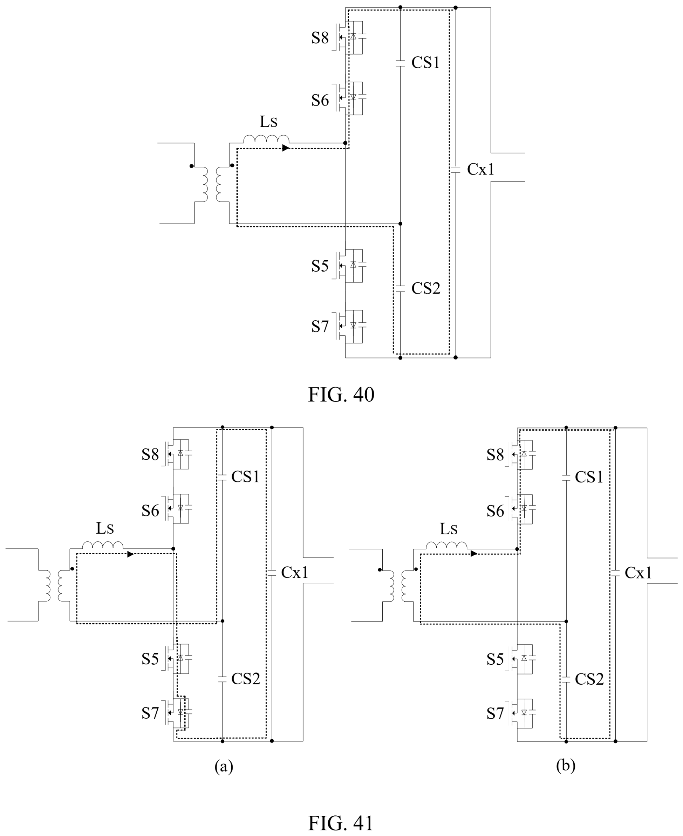

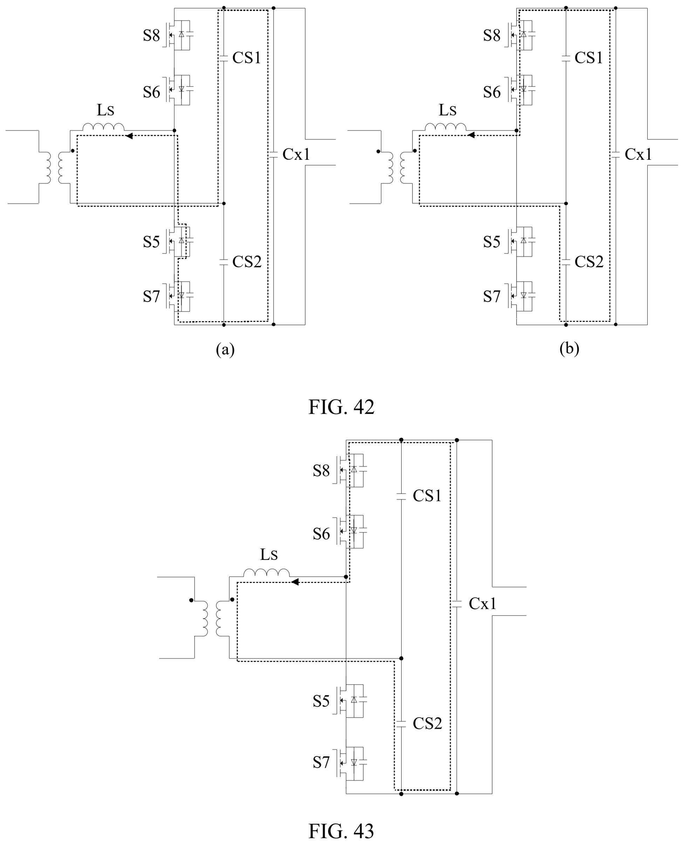

FIG. 40 and FIG. 42 are schematics of yet another current loop when an alternating current voltage is in a P region according to an embodiment of this application. A current direction shown in FIG. 40 is opposite to a current direction shown in FIG. 42. FIG. 41 and FIG. 43 are schematics of yet another current loop when an alternating current voltage is in an N region according to an embodiment of this application. A current direction shown in FIG. 41 is opposite to a current direction shown in FIG. 43.

For the states of the switching transistors and the current loops shown in FIG. 40 and FIG. 42, refer to the content in FIG. 5. For the states of the switching transistors and the current loops shown in FIG. 41 and FIG. 43, refer to the content in FIG. 9. Details are not described again.

In this embodiment of this application, switching transistors that are turned on in the initial working mode are S6, S8, and S7, and switching transistors that are turned on in the target working mode are S6, S8, and S5. A path of a bidirectional current path in the initial working mode is the same as a path of a bidirectional current path in the target working mode to be switched to. That is, the bidirectional current paths are both formed through S6, S8, Cx1, and Cs2. Therefore, if the initial working mode is switched to the target working mode, in response to the change of the alternating current voltage output by the filter circuit 332 from being greater than the preset positive voltage threshold to being less than the preset negative voltage threshold, the controller 340 turns off a switching transistor that is in the three switching transistors that are turned on in the initial working mode and that does not belong to the target switching transistors, that is, S7, so that S6 and S8 are in an on state, and the inductor current passes through S6, S8, Cx1, and Cs2 to form a freewheeling path. After S7 is completely turned off, the controller 340 turns on a switching transistor that is not turned on in the target switching transistors, that is, S5, so that S5, S6, and S8 are in an on state. In addition to forming the freewheeling path through S6, S8, Cx1, and Cs2, the inductor current alternatively passes through Cs1, Cx1, the freewheeling diode on S7, and S5 to form a freewheeling path.

In a process of switching the states of the switching transistors by the controller 340, the current of the inductor Ls always has a freewheeling path. In addition, the four switching transistors S5, S6, S7, and S8 are not directly connected at any moment, so that a risk of damage to the switching transistors is eliminated.

(2) The initial working mode in which the two switching transistors included in the lower half bridge arm and one switching transistor included in the upper half bridge arm are turned on, and the other switching transistor included in the upper half bridge arm is turned off is switched to the target working mode in which the two switching transistors included in the lower half bridge arm are turned on, and states of the switching transistors included in the upper half bridge arm are opposite to those of the switching transistors in the initial working mode.

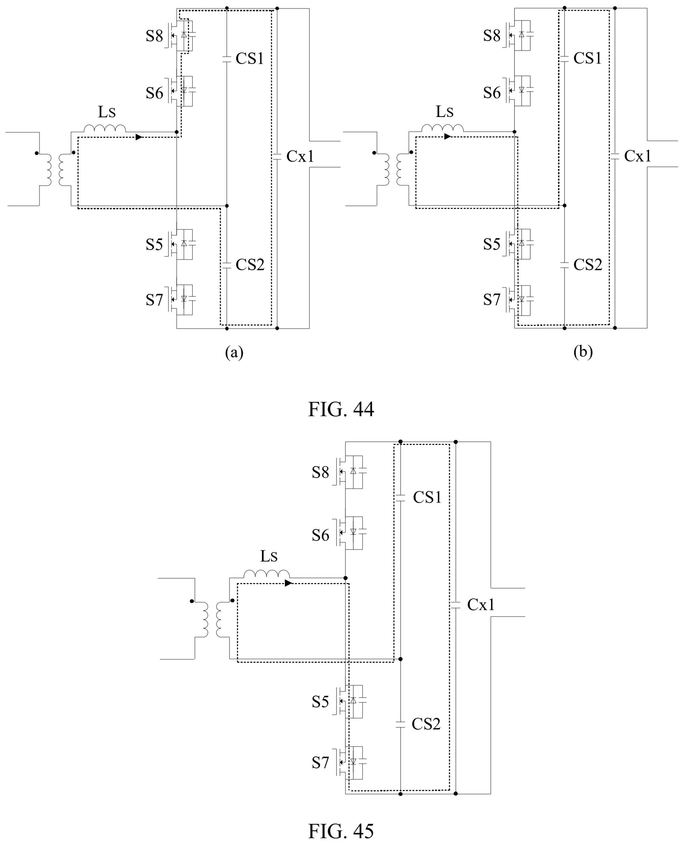

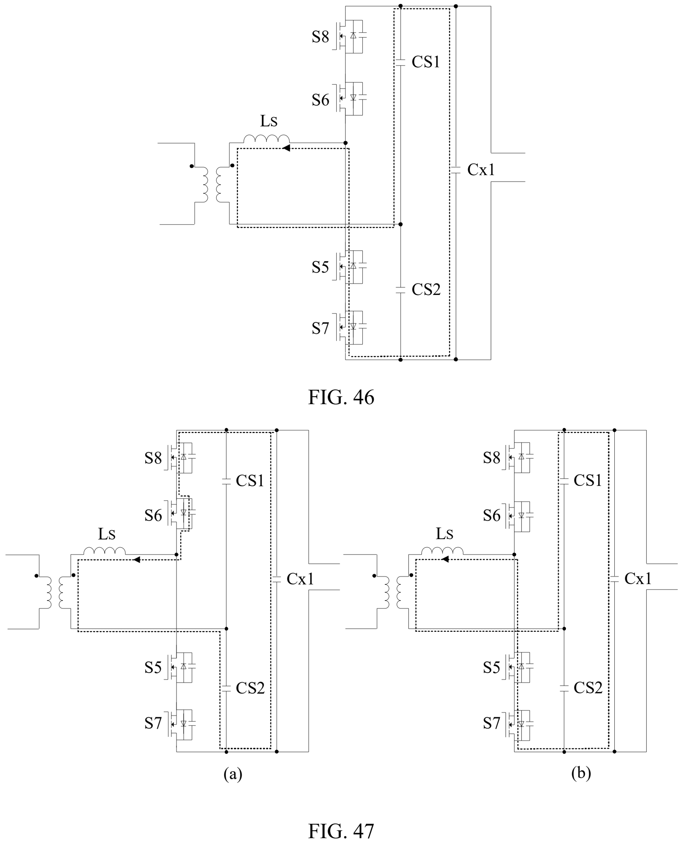

FIG. 44 and FIG. 46 are schematics of yet another current loop when an alternating current voltage is in a P region according to an embodiment of this application. A current direction shown in FIG. 44 is opposite to a current direction shown in FIG. 46. FIG. 45 and FIG. 47 are schematics of yet another current loop when an alternating current voltage is in an N region according to an embodiment of this application. A current direction shown in FIG. 45 is opposite to a current direction shown in FIG. 47.

For the states of the switching transistors and the current loops shown in FIG. 44 and FIG. 46, refer to the content in FIG. 7. For the states of the switching transistors and the current loops shown in FIG. 45 and FIG. 47, refer to the content in FIG. 11. Details are not described again.

In this embodiment of this application, switching transistors that are turned on in the initial working mode are S5, S7, and S6, and switching transistors that are turned on in the target working mode are S5, S7, and S8. The path of the bidirectional current path in the initial working mode is the same as the path of the bidirectional current path in the target working mode to be switched to. Therefore, if the initial working mode is switched to the target working mode, in response to the change of the alternating current voltage output by the filter circuit 332 from being greater than the preset positive voltage threshold to being less than the preset negative voltage threshold, the controller 340 first turns off S6, and then turns on S8. For brevity, a freewheeling path of the inductor current in a switching process is not described in detail.

(3) The initial working mode in which the two switching transistors included in the upper half bridge arm and one switching transistor included in the lower half bridge arm are turned on, and the other switching transistor included in the lower half bridge arm is turned off is switched to the target working mode in which the two switching transistors included in the lower half bridge arm and one switching transistor included in the upper half bridge arm are turned on, and the other switching transistor included in the lower half bridge arm is turned off.

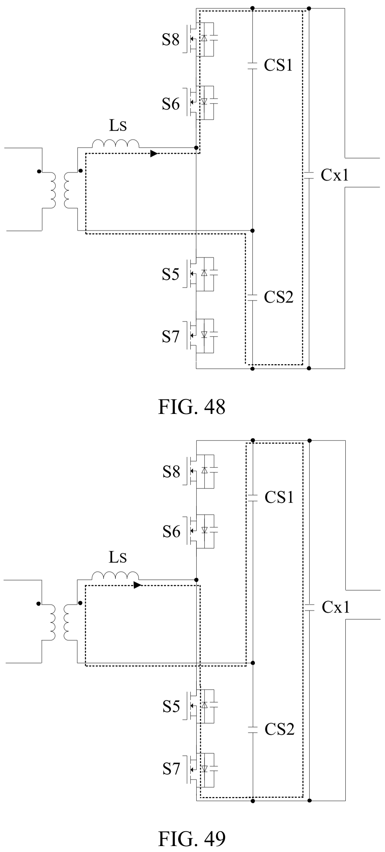

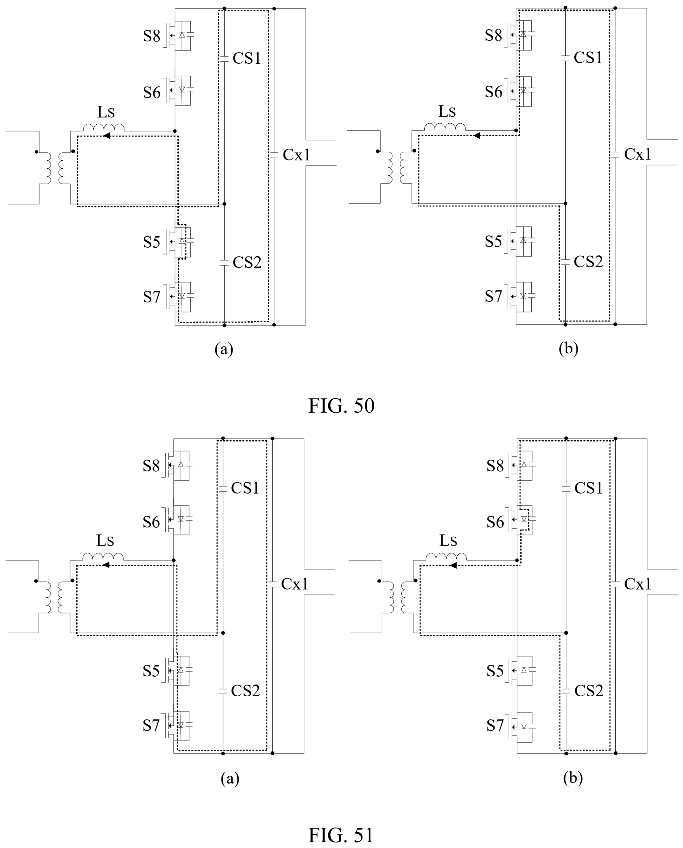

FIG. 48 and FIG. 50 are schematics of yet another current loop when an alternating current voltage is in a P region according to an embodiment of this application. A current direction shown in FIG. 48 is opposite to a current direction shown in FIG. 50. FIG. 49 and FIG. 51 are schematics of yet another current loop when an alternating current voltage is in an N region according to an embodiment of this application. A current direction shown in FIG. 49 is opposite to a current direction shown in FIG. 51.

For the states of the switching transistors and current paths in FIG. 48 and FIG. 50, refer to the content in FIG. 5. For the states of the switching transistors and current paths in FIG. 49 and FIG. 51, refer to the content in FIG. 11. Details are not described again.

In this embodiment of this application, switching transistors that are turned on in the initial working mode are S6, S8, and S7, and the current passes through S6, S8, Cx1, and Cs2 to form a bidirectional current path; and switching transistors that are turned on in the target working mode are S5, S7, and S8, and the current passes through S5, S7, Cx1, and Cs1 to form a bidirectional current path. Because paths of the bidirectional current paths formed in the two working modes are different, in response to the change of the alternating current voltage output by the filter circuit 332 from being greater than the preset positive voltage threshold to being less than the preset negative voltage threshold, the controller 340 first turns off S8, then turns on S5, then turns off S6, and finally turns on S8.

(4) The initial working mode in which the two switching transistors included in the lower half bridge arm and one switching transistor included in the upper half bridge arm are turned on, and the other switching transistor included in the upper half bridge arm is turned off is switched to the target working mode in which the two switching transistors included in the upper half bridge arm and one switching transistor included in the lower half bridge arm are turned on, and the other switching transistor included in the lower half bridge arm is turned off.

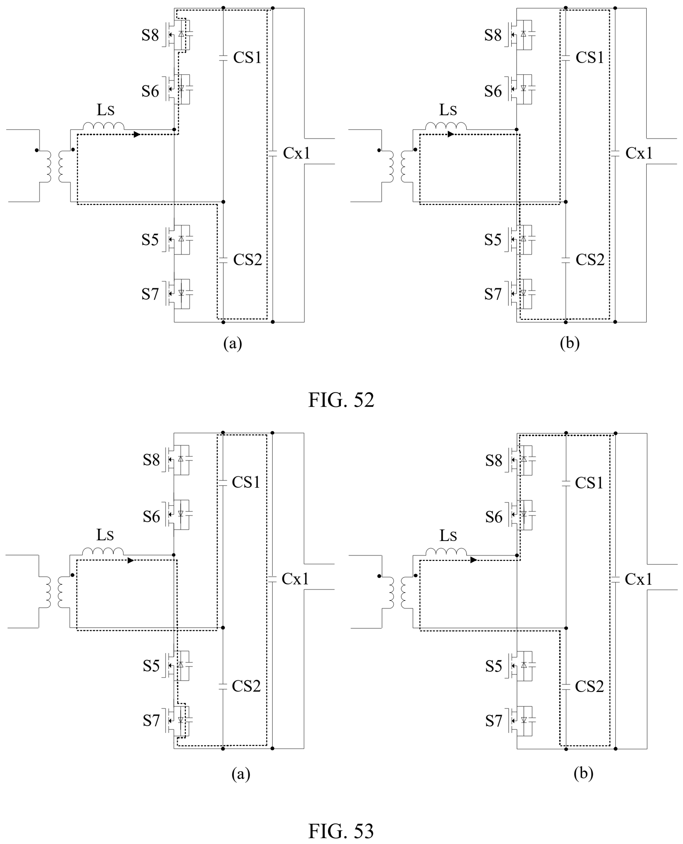

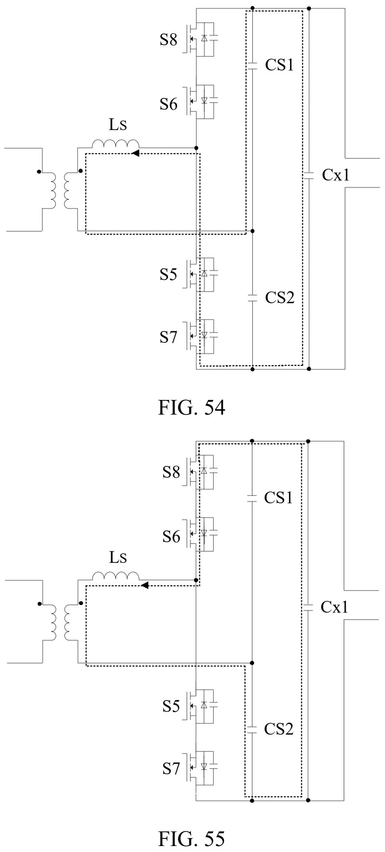

FIG. 52 and FIG. 54 are schematics of yet another current loop when an alternating current voltage is in a P region according to an embodiment of this application. A current direction shown in FIG. 52 is opposite to a current direction shown in FIG. 54. FIG. 53 and FIG. 55 are schematics of yet another current loop when an alternating current voltage is in an N region according to an embodiment of this application. A current direction shown in FIG. 53 is opposite to a current direction shown in FIG. 55.

For the states of the switching transistors and current paths in FIG. 52 and FIG. 54, refer to the content in FIG. 7. For the states of the switching transistors and current paths in FIG. 53 and FIG. 55, refer to the content in FIG. 9. Details are not described again.

In this embodiment of this application, switching transistors that are turned on in the initial working mode are S5, S7, and S6, and the current passes through S5, S7, Cx1, and Cs1 to form a bidirectional current path; and switching transistors that are turned on in the target working mode are S6, S8, and S5, and the current passes through S6, S8, Cx1, and Cs2 to form a bidirectional current path. Because paths of the bidirectional currents formed in the two working modes are different, in response to the change of the alternating current voltage output by the filter circuit 332 from being greater than the preset positive voltage threshold to being less than the preset negative voltage threshold, the controller 340 first turns off S5, then turns on S8, then turns off S7, and finally turns on S5.

In an embodiment, the controller 340 is configured to: in response to the change of the alternating current voltage output by the filter circuit 332 from being less than the preset negative voltage threshold to being greater than the preset positive voltage threshold, when a path of a bidirectional current path of the half-bridge circuit 331 in the negative voltage working mode is the same as a path of a bidirectional current path of the half-bridge circuit 331 in the positive voltage working mode to be switched to, first turn off a switching transistor that is in the three switching transistors that are turned on in the negative voltage working mode and that does not belong to the target switching transistors, and then turn on a switching transistor that is not turned on in the target switching transistors, to control the inverter to switch from the negative voltage working mode to the positive voltage working mode, where the target switching transistors are switching transistors that are turned on in the positive voltage working mode.

In an embodiment, the controller 340 is configured to: in response to the change of the alternating current voltage output by the filter circuit 332 from being less than the preset negative voltage threshold to being greater than the preset positive voltage threshold, when a path of a bidirectional current path of the half-bridge circuit 331 in the negative voltage working mode is different from a path of a bidirectional current path of the half-bridge circuit 331 in the positive voltage working mode to be switched to, first turn off a switching transistor whose freewheeling direction in the bidirectional current path of the half-bridge circuit 331 in the negative voltage working mode is the same as the direction of the current flowing through the secondary-side winding of the transformer, then turn on a switching transistor that is not turned on in a unidirectional current path of the half-bridge circuit 331 in the negative voltage working mode, then turn off another turned-on switching transistor in the bidirectional current path of the half-bridge circuit 331 in the negative voltage working mode, and finally turn on the switching transistor whose freewheeling direction in the bidirectional current path of the half-bridge circuit 331 in the negative voltage working mode is the same as the direction of the current flowing through the secondary-side winding of the transformer.

In the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

In this embodiment of this application, the controller 340 may switch the states of the switching transistors based on whether paths of bidirectional circuit paths in two working modes: an initial working mode and a target working mode are consistent. For details, refer to the following description. In this embodiment of this application, the initial working mode is the negative voltage working mode, and the target working mode is the positive voltage working mode. In other words, in this embodiment of this application, the controller 340 controls the inverter to switch from the negative voltage working mode to the positive voltage working mode.

### Case 6: The alternating current voltage is switched from the N region to the P region

(1) The initial working mode in which the two switching transistors included in the upper half bridge arm and one switching transistor included in the lower half bridge arm are turned on, and the other switching transistor included in the lower half bridge arm is turned off is switched to the target working mode in which the two switching transistors included in the upper half bridge arm are turned on, and states of the switching transistors included in the lower half bridge arm are opposite to those of the switching transistors in the initial working mode.

Refer to FIG. 40 to FIG. 43. FIG. 41 and FIG. 43 show states of the switching transistors in the initial working mode. FIG. 40 and FIG. 42 show states of the switching transistors in the target working mode.

In this embodiment of this application, switching transistors that are turned on in the initial working mode are S6, S8, and S5, and switching transistors that are turned on in the target working mode are S6, S8, and S7. The path of the bidirectional current path in the initial working mode is the same as the path of the bidirectional current path in the target working mode to be switched to. Therefore, if the initial working mode is switched to the target working mode, in response to the change of the alternating current voltage output by the filter circuit 332 from being less than the preset negative voltage threshold to being greater than the preset positive voltage threshold, the controller 340 first turns off S5, and then turns on S7.

(2) The initial working mode in which the two switching transistors included in the lower half bridge arm and one switching transistor included in the upper half bridge arm are turned on, and the other switching transistor included in the upper half bridge arm is turned off is switched to the target working mode in which the two switching transistors included in the lower half bridge arm are turned on, and states of the switching transistors included in the upper half bridge arm are opposite to those of the switching transistors in the initial working mode.

Refer to FIG. 44 to FIG. 47. FIG. 45 and FIG. 47 show states of the switching transistors in the initial working mode. FIG. 44 and FIG. 46 show states of the switching transistors in the target working mode.

In this embodiment of this application, switching transistors that are turned on in the initial working mode are S5, S7, and S8, and switching transistors that are turned on in the target working mode are S5, S7, and S6. The path of the bidirectional current path in the initial working mode is the same as the path of the bidirectional current path in the target working mode to be switched to. Therefore, if the initial working mode is switched to the target working mode, in response to the change of the alternating current voltage output by the filter circuit 332 from being less than the preset negative voltage threshold to being greater than the preset positive voltage threshold, the controller 340 first turns off S8, and then turns on S6.

(3) The initial working mode in which the two switching transistors included in the lower half bridge arm and one switching transistor included in the upper half bridge arm are turned on, and the other switching transistor included in the lower half bridge arm is turned off is switched to the target working mode in which the two switching transistors included in the upper half bridge arm and one switching transistor included in the lower half bridge arm are turned on, and the other switching transistor included in the lower half bridge arm is turned off.

Refer to FIG. 48 to FIG. 51. FIG. 49 and FIG. 51 show states of the switching transistors in the initial working mode. FIG. 48 and FIG. 50 show states of the switching transistors in the target working mode.

In this embodiment of this application, switching transistors that are turned on in the initial working mode are S5, S7, and S8, and the current passes through S5, S7, Cx1, and Cs1 to form a bidirectional current path; and switching transistors that are turned on in the target initial working mode are S6, S8, and S7, and the current passes through S6, S8, Cx1, and Cs2 to form a bidirectional current path. Because paths of the bidirectional currents formed in the two working modes are different, in response to the change of the alternating current voltage output by the filter circuit 332 from being less than the preset negative voltage threshold to being greater than the preset positive voltage threshold, the controller 340 first turns off S7, then turns on S6, then turns off S5, and finally turns on S7.

(4) The initial working mode in which the two switching transistors included in the lower half bridge arm and one switching transistor included in the upper half bridge arm are turned on, and the other switching transistor included in the upper half bridge arm is turned off is switched to the target working mode in which the two switching transistors included in the upper half bridge arm and one switching transistor included in the lower half bridge arm are turned on, and the other switching transistor included in the lower half bridge arm is turned off.

Refer to FIG. 52 to FIG. 55. FIG. 53 and FIG. 55 show states of the switching transistors in the initial working mode. FIG. 52 and FIG. 54 show states of the switching transistors in the target working mode.

In this embodiment of this application, switching transistors that are turned on in the initial working mode are S6, S8, and S5, and the current passes through S6, S8, Cx1, and Cs2 to form a bidirectional current path; and switching transistors that are turned on in the target initial working mode are S5, S7, and S6, and the current passes through S5, S7, Cx1, and Cs1 to form a bidirectional current path. Because paths of the bidirectional currents formed in the two working modes are different, in response to the change of the alternating current voltage output by the filter circuit 332 from being less than the preset negative voltage threshold to being greater than the preset positive voltage threshold, the controller 340 first turns off S6, then turns on S7, then turns off S8, and finally turns on S6.

In this embodiment of this application, the controller switches the states of the switching transistors in different cases based on whether the paths of the bidirectional current paths in the initial working mode and the target working mode to be switched to are the same. In a process of switching the states of the switching transistors by the controller, it is ensured that at least one switching transistor is in an on state. Therefore, the inductor current always has a freewheeling path. In addition, in the process of switching the switching transistors by the controller, the switching transistors are sequentially turned on or off. At any moment, only some of the four switching transistors included in the bridge arm are in an on state, so that a case in which the switching transistors are directly connected is avoided, and a risk of damage to the switching transistors caused by inaccurate determining of a polarity of the alternating current voltage is eliminated.

In an embodiment, the controller 340 may switch from the positive voltage working mode to the negative voltage working mode with reference to a direction of the current flowing through the secondary-side winding of the transformer.

In an embodiment, the controller 340 is configured to: in response to the change of the alternating current voltage output by the filter circuit 332 from being greater than the preset positive voltage threshold to being less than the preset negative voltage threshold, when a path of a bidirectional current path of the half-bridge circuit 331 in the positive voltage working mode is different from a path of a bidirectional current path of the half-bridge circuit 331 in the negative voltage working mode to be switched to, and a direction of the current flowing through the secondary-side winding of the transformer is the same as a direction of a current in a unidirectional current path of the half-bridge circuit 331 in the positive voltage working mode, first turn off a switching transistor other than target switching transistors in the bidirectional current path of the half-bridge circuit 331 in the positive voltage working mode, and then turn on a switching transistor that is not turned on in the unidirectional current path of the half-bridge circuit 331 in the positive voltage working mode, where the target switching transistors are switching transistors that are turned on in the negative voltage working mode.

In an embodiment, the controller 340 is configured to: in response to the change of the alternating current voltage output by the filter circuit 332 from being greater than the preset positive voltage threshold to being less than the preset negative voltage threshold, when a path of a bidirectional current path of the half-bridge circuit 331 in the positive voltage working mode is different from a path of a bidirectional current path of the half-bridge circuit 331 in the negative voltage working mode to be switched to, and a direction of the current flowing through the secondary-side winding of the transformer is opposite to a direction of a current in a unidirectional current path of the half-bridge circuit 331 in the positive voltage working mode, first turn off a switching transistor whose freewheeling direction in the bidirectional current path of the half-bridge circuit in the positive voltage working mode is the same as the direction of the current flowing through the secondary-side winding of the transformer, then turn on a switching transistor that is not turned on in the unidirectional current path of the half-bridge circuit 331 in the positive voltage working mode, then turn off another turned-on switching transistor in the bidirectional current path of the half-bridge circuit 331 in the positive voltage working mode, and finally turn on the switching transistor whose freewheeling direction in the bidirectional current path of the half-bridge circuit 331 in the positive voltage working mode is the same as the direction of the current flowing through the secondary-side winding of the transformer.

In this embodiment of this application, in the bidirectional current path, a current flowing through the secondary-side winding of the transformer has two directions, and the two switching transistors of the upper half bridge arm or the lower half bridge arm through which the current flows are both turned on. In the unidirectional current path, a current flowing through the secondary-side winding has only one direction, and only one of the two switching transistors of the upper half bridge arm or the lower half bridge arm through which the current flows is turned on.

In this embodiment of this application, the initial working mode is the positive voltage working mode, and the target working mode is the negative voltage working mode. In other words, in this embodiment of this application, the controller 340 controls the inverter to switch from the positive voltage working mode to the negative voltage working mode.

### Case 5: The alternating current voltage is switched from the P region to the N region

(1) Refer to FIG. 48 to FIG. 51. A current direction in the unidirectional current path in the initial working mode is a current direction shown in (a) in FIG. 50. If a direction of a current flowing through an inductor is the same as the current direction shown in (a) in FIG. 50, in response to the change of the alternating current voltage output by the filter circuit 332 from being greater than the preset positive voltage threshold to being less than the preset negative voltage threshold, the controller 340 turns off a switching transistor other than target switching transistors in the bidirectional current path in the initial working mode, that is, S6, so that S7 and S8 are in an on state, and the inductor current passes through the freewheeling diode on S6, S8, Cx1, and Cs2 to form a freewheeling path, and passes through Cs1, Cx1, S7, and the freewheeling diode on S5 to form a freewheeling path. After S6 is completely turned off, the controller 340 turns on a switching transistor that is not turned on in the unidirectional current path, that is, S5, so that S5, S7, and S8 are in an on state. The inductor current passes through the freewheeling diode on S6, S8, Cx1, and Cs2 to form a freewheeling path, and passes through Cs1, Cx1, S7, and S5 to form a freewheeling path.
   If a direction of a current flowing through an inductor is opposite to the current direction shown in (a) in FIG. 50, a logical action of the controller 340 is similar to a logical action performed when the direction of the current flowing through the inductor is not referred to. In response to the change of the alternating current voltage output by the filter circuit 332 from being greater than the preset positive voltage threshold to being less than the preset negative voltage threshold, the controller 340 first turns off S8, then turns on S5, then turns off S6, and finally turns on S8.
(2) Refer to FIG. 52 to FIG. 55. A current direction in the unidirectional current path in the initial working mode is a current direction shown in (a) in FIG. 52. If a direction of a current flowing through an inductor is the same as the current direction shown in (a) in FIG. 52, in response to the change of the alternating current voltage output by the filter circuit 332 from being greater than the preset positive voltage threshold to being less than the preset negative voltage threshold, the controller 340 first turns off S7, and then turns on S8.

If a direction of a current flowing through an inductor is opposite to the current direction shown in (a) in FIG. 52, a logical action of the controller 340 is similar to a logical action performed when the direction of the current flowing through the inductor is not referred to. In response to the change of the alternating current voltage output by the filter circuit 332 from being greater than the preset positive voltage threshold to being less than the preset negative voltage threshold, the controller 340 first turns off S5, then turns on S8, then turns off S7, and finally turns on S5.

In an embodiment, the controller 340 may switch from the negative voltage working mode to the positive voltage working mode with reference to a direction of the current flowing through the secondary-side winding of the transformer.

In an embodiment, the controller 340 is configured to: in response to the change of the alternating current voltage output by the filter circuit 332 from being less than the preset negative voltage threshold to being greater than the preset positive voltage threshold, when a path of a bidirectional current path of the half-bridge circuit in the negative voltage working mode is different from a path of a bidirectional current path of the half-bridge circuit 331 in the positive voltage working mode to be switched to, and a direction of the current flowing through the secondary-side winding of the transformer is the same as a direction of a current in a unidirectional current path of the half-bridge circuit 331 in the negative voltage working mode, first turn off a switching transistor other than target switching transistors in the bidirectional current path of the half-bridge circuit 331 in the negative voltage working mode, and then turn on a switching transistor that is not turned on in the unidirectional current path of the half-bridge circuit 331 in the negative voltage working mode, where the target switching transistors are switching transistors that are turned on in the positive voltage working mode.

In an embodiment, the controller 340 is configured to: in response to the change of the alternating current voltage output by the filter circuit 332 from being less than the preset negative voltage threshold to being greater than the preset positive voltage threshold, when a path of a bidirectional current path of the half-bridge circuit 331 in the negative voltage working mode is different from a path of a bidirectional current path of the half-bridge circuit 331 in the positive voltage working mode to be switched to, and a direction of the current flowing through the secondary-side winding of the transformer is opposite to a direction of a current in a unidirectional current path of the half-bridge circuit 331 in the negative voltage working mode, first turn off a switching transistor whose freewheeling direction in the bidirectional current path of the half-bridge circuit 331 in the negative voltage working mode is the same as the direction of the current flowing through the secondary-side winding of the transformer, then turn on a switching transistor that is not turned on in the unidirectional current path of the half-bridge circuit 331 in the negative voltage working mode, then turn off another turned-on switching transistor in the bidirectional current path of the half-bridge circuit 331 in the negative voltage working mode, and finally turn on the switching transistor whose freewheeling direction in the bidirectional current path of the half-bridge circuit 331 in the negative voltage working mode is the same as the direction of the current flowing through the secondary-side winding of the transformer.

In this embodiment of this application, in the bidirectional current path, a current flowing through the secondary-side winding of the transformer has two directions, and the two switching transistors of the upper half bridge arm or the lower half bridge arm through which the current flows are both turned on. In the unidirectional current path, a current flowing through the secondary-side winding has only one direction, and only one of the two switching transistors of the upper half bridge arm or the lower half bridge arm through which the current flows is turned on.

In this embodiment of this application, the initial working mode is the positive voltage working mode, and the target working mode is the negative voltage working mode. In other words, in this embodiment of this application, the controller 340 controls the inverter to switch from the negative voltage working mode to the positive voltage working mode.

### Case 6: The alternating current voltage is switched from the N region to the P region

(1) Refer to FIG. 48 to FIG. 51. A current direction in the unidirectional current path in the initial working mode is a current direction shown in (b) in FIG. 51. If a direction of a current flowing through an inductor is the same as the current direction shown in (b) in FIG. 51, in response to the change of the alternating current voltage output by the filter circuit 332 from being less than the preset negative voltage threshold to being greater than the preset positive voltage threshold, the controller 340 first turns off S5, and then turns on S6, to control the inverter to switch from the initial working mode to the target working mode.
   If a direction of a current flowing through an inductor is opposite to the current direction shown in (b) in FIG. 51, a logical action of the controller 340 is similar to a logical action performed when the direction of the current flowing through the inductor is not referred to. In response to the change of the alternating current voltage output by the filter circuit 332 from being less than the preset negative voltage threshold to being greater than the preset positive voltage threshold, the controller 340 first turns off S7, then turns on S6, then turns off S5, and finally turns on S7, to control the inverter to switch from the initial working mode to the target working mode.
(2) Refer to FIG. 52 to FIG. 55. A current direction in the unidirectional current path in the initial working mode is a current direction shown in (b) in FIG. 53. If a direction of a current flowing through an inductor is the same as the current direction shown in (b) in FIG. 53, in response to the change of the alternating current voltage output by the filter circuit 332 from being less than the preset negative voltage threshold to being greater than the preset positive voltage threshold, the controller 340 first turns off S8, and then turns on S7, to control the inverter to switch from the initial working mode to the target working mode.

If a direction of a current flowing through an inductor is opposite to the current direction shown in (b) in FIG. 53, in response to the change of the alternating current voltage output by the filter circuit 332 from being less than the preset negative voltage threshold to being greater than the preset positive voltage threshold, the controller 340 first turns off S6, then turns on S7, then turns off S8, and finally turns on S6, to control the inverter to switch from the initial working mode to the target working mode.

It should be noted that, in a process of switching the switching transistors by the controller 340, only after a switching action of controlling a switching transistor to change an on/off state is completed, the controller 340 controls another switching transistor to start to perform the switching action of changing the on/off state. In addition, in the process of switching the switching transistors by the controller 340, the inductor current always has a freewheeling path. Details are not described one by one.

In this embodiment of this application, if a path of a bidirectional current path in the initial working mode is different from a path of a bidirectional current path in the target working mode to be switched to, the controller switches the states of the switching transistors with reference to the direction of the current of the secondary-side winding of the transformer. Particularly, when the direction of the current flowing through the secondary-side winding of the transformer is the same as the direction of the current in the unidirectional current path in the initial working mode to be switched to, a quantity of actions of the controller is reduced.

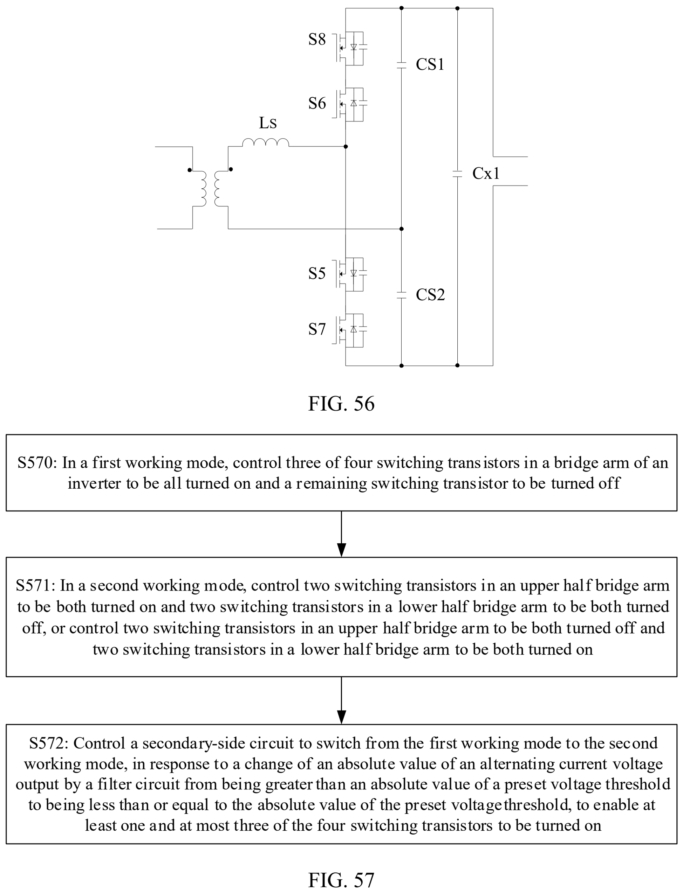

It should be noted that the switching transistors in the schematics shown in the foregoing embodiments are all common-source switching transistors. For example, a source of S8 is connected to a source of S6, and a source of S7 is connected to a source of S5. In embodiments of this application, the switching transistors may alternatively be common-drain switching transistors. As shown in FIG. 56, a drain of S8 is connected to a drain of S6, and a drain of S7 is connected to a drain of S5. This is not limited. In other words, as shown in FIG. 56, a cathode of the freewheeling diode of S8 is connected to a cathode of the freewheeling diode of S6, and a cathode of the freewheeling diode of S7 is connected to a cathode of the freewheeling diode of S5.

FIG. 57 is a diagram of a control method for sending a PWM driver gating signal according to an embodiment of this application. It should be understood that the descriptions of the method embodiments correspond to descriptions of apparatus embodiments. Therefore, for content that is not described in detail, refer to the foregoing method embodiments. Details are not described again.

The control method for sending the PWM driver gating signal is applied to an inverter, and includes steps S570 to S572.

S570: In a first working mode, control three of four switching transistors in a bridge arm of the inverter to be all turned on and a remaining switching transistor to be turned off, where a secondary-side circuit of the inverter includes a half-bridge circuit and a filter circuit, the half-bridge circuit includes a bridge arm, the bridge arm includes an upper half bridge arm and a lower half bridge arm, the upper half bridge arm and the lower half bridge arm each include a group of switching transistors, two switching transistors included in each group of the switching transistors each include a freewheeling diode connected in parallel, and freewheeling directions of two freewheeling diodes connected in parallel in each group of the switching transistors are opposite.

S571: In a second working mode, control the two switching transistors in the upper half bridge arm to be both turned on and the two switching transistors in the lower half bridge arm to be both turned off, or control the two switching transistors in the upper half bridge arm to be both turned off and the two switching transistors in the lower half bridge arm to be both turned on.

S572: Control the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold, to enable at least one and at most three of the four switching transistors to be turned on.

In the foregoing embodiments of the inverter, that the controller is configured to switch the states of the switching transistors under different conditions still adapts to the method embodiments. For brevity, embodiments are not listed one by one in this application.

An embodiment of this application further provides a computer-readable storage medium. The computer-readable storage medium stores computer instructions used to implement the method performed by the controller in the foregoing method embodiments.

An embodiment of this application further provides a computer program product including instructions. The instructions are executed by a computer, so that the computer implements the method performed by the controller in the foregoing method embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter, comprising:
a primary-side circuit, wherein the primary-side circuit is configured to convert a direct current into an alternating current;
a transformer, wherein the transformer is configured to perform voltage boosting or voltage bucking on the alternating current output by the primary-side circuit;
a secondary-side circuit, wherein the secondary-side circuit is configured to: convert a frequency of the boosted or bucked alternating current and filter the alternating current obtained after frequency conversion, the secondary-side circuit comprises a half-bridge circuit and a filter circuit, the half-bridge circuit comprises a bridge arm and at least two capacitors, the two capacitors are connected in series and then connected in parallel to the bridge arm, the bridge arm comprises an upper half bridge arm and a lower half bridge arm, a connection point between the upper half bridge arm and the lower half bridge arm is connected to one end of a secondary-side winding of the transformer, a connection point between the two capacitors is connected to the other end of the secondary-side winding of the transformer, the upper half bridge arm and the lower half bridge arm each comprise a group of switching transistors, two switching transistors comprised in each group of the switching transistors each comprise a freewheeling diode connected in parallel, freewheeling directions of two freewheeling diodes connected in parallel in each group of the switching transistors are opposite, and the filter circuit is connected to the half-bridge circuit and outputs an alternating current voltage; and
a controller, wherein the controller is configured to control the switching transistors of the bridge arm to be turned on and off, wherein
the inverter comprises a first working mode and a second working mode, wherein in the first working mode, three of the four switching transistors in the bridge arm are all turned on, and a remaining switching transistor is turned off, and in the second working mode, the two switching transistors in the upper half bridge arm are both turned on, and the two switching transistors in the lower half bridge arm are both turned off, or the two switching transistors in the upper half bridge arm are both turned off, and the two switching transistors in the lower half bridge arm are both turned on; and
the controller is further configured to:
in response to a change of an absolute value of the alternating current voltage output by the filter circuit from being greater than an absolute value of a preset voltage threshold to being less than or equal to the absolute value of the preset voltage threshold, control the inverter to switch from the first working mode to the second working mode, to enable at least one and at most three of the four switching transistors comprised in the bridge arm to be turned on.

2. The inverter according to claim 1, wherein the controller is configured to:
in response to the change of the absolute value of the alternating current voltage output by the filter circuit from being greater than the absolute value of the preset voltage threshold to being less than or equal to the absolute value of the preset voltage threshold, when two of the three switching transistors that are turned on in the first working mode are the same as two target switching transistors that are turned on in the second working mode to be switched to, turn off a switching transistor other than the target switching transistors in the three switching transistors that are turned on in the first working mode, to control the inverter to switch from the first working mode to the second working mode.

3. The inverter according to claim 1 or 2, wherein the controller is configured to:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, first turn off a switching transistor whose freewheeling direction in a bidirectional current path of the half-bridge circuit in the first working mode is opposite to a current direction of a unidirectional current path of the half-bridge circuit in the first working mode, then turn on a switching transistor that is not turned on in the unidirectional current path, and then turn off a switching transistor whose freewheeling direction in the bidirectional current path is the same as the current direction of the unidirectional current path, to control the inverter to switch from the first working mode to the second working mode, wherein
in the bidirectional current path, a current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

4. The inverter according to claim 1 or 2, wherein the controller is configured to:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through the secondary-side winding of the transformer is the same as a direction of a current in a unidirectional current path in the first working mode, first simultaneously turn off two switching transistors in a bidirectional current path of the half-bridge circuit in the first working mode, and then turn on a switching transistor that is not turned on in the unidirectional current path of the half-bridge circuit in the first working mode, to control the inverter to switch from the first working mode to the second working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

5. The inverter according to claim 1 or 2, wherein the controller is configured to:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through the secondary-side winding of the transformer is opposite to a direction of a current in a unidirectional current path in the first working mode, first turn off a switching transistor whose freewheeling direction in the bidirectional current path is opposite to the current direction of the unidirectional current path, then turn on a switching transistor that is not turned on in the unidirectional current path, and then turn off a switching transistor whose freewheeling direction in the bidirectional current path is the same as the current direction of the unidirectional current path, to control the inverter to switch from the first working mode to the second working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

6. The inverter according to any one of claims 1 to 5, wherein the controller is further configured to:
in response to a change of the absolute value of the alternating current voltage output by the filter circuit from being less than or equal to the absolute value of the preset voltage threshold to being greater than the absolute value of the preset voltage threshold, control the inverter to switch from the second working mode to the first working mode, to enable at least one and at most three of the four switching transistors comprised in the bridge arm to be turned on.

7. The inverter according to claim 6, wherein the controller is configured to:
in response to the change of the absolute value of the alternating current voltage output by the filter circuit from being less than or equal to the absolute value of the preset voltage threshold to being greater than the absolute value of the preset voltage threshold, when two switching transistors that are turned on in the second working mode are the same as two of three target switching transistors that are turned on in the first working mode to be switched to, turn on a switching transistor other than the two turned-on switching transistors in the target switching transistors, to control the inverter to switch from the second working mode to the first working mode.

8. The inverter according to claim 6 or 7, wherein the controller is configured to:
in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, first turn on a switching transistor whose freewheeling direction in the bidirectional current path of the half-bridge circuit in the first working mode to be switched to is the same as the current direction of the unidirectional current path of the half-bridge circuit in the first working mode, then turn off a switching transistor that is in the unidirectional current path and that does not belong to the target switching transistors, and then turn on a switching transistor that is not turned on in the bidirectional current path, to control the inverter to switch from the second working mode to the first working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

9. The inverter according to claim 6 or 7, wherein the controller is configured to:
in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, and the direction of the current flowing through the secondary-side winding of the transformer is the same as the direction of the current in the unidirectional current path in the first working mode, first turn off a switching transistor that is in the unidirectional current path of the half-bridge circuit in the first working mode and that does not belong to the target switching transistors, and then simultaneously turn on switching transistors that are not turned on in the bidirectional current path of the half-bridge circuit in the first working mode, to control the inverter to switch from the second working mode to the first working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

10. The inverter according to claim 6 or 7, wherein the controller is configured to:
in response to the change of the absolute value of the alternating current voltage output by the filter circuit from being less than or equal to the absolute value of the preset voltage threshold to being greater than the absolute value of the preset voltage threshold, when only one of the two switching transistors that are turned on in the second working mode is the same as one of the three target switching transistors that are turned on in the first working mode to be switched to, and the direction of the current flowing through the secondary-side winding of the transformer is opposite to the direction of the current in the unidirectional current path in the first working mode, first turn on a switching transistor whose freewheeling direction in the bidirectional current path is the same as the current direction of the unidirectional current path, then turn off a switching transistor that is in the unidirectional current path and that does not belong to the target switching transistors, and then turn on a switching transistor that is not turned on in the bidirectional current path, to control the inverter to switch from the second working mode to the first working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

11. The inverter according to any one of claims 1 to 10, wherein the controller is configured to: after a switching action of controlling a switching transistor to change an on/off state is completed, control another switching transistor to start to perform the switching action of changing the on/off state.

12. The inverter according to any one of claims 1 to 11, wherein anodes of the two diodes that are connected in parallel and that are of the two switching transistors comprised in each group of the switching transistors are connected, or cathodes of the two diodes that are connected in parallel and that are of the two switching transistors comprised in each group of the switching transistors are connected.

13. A control method for sending a PWM driver gating signal, applied to an inverter, wherein the control method for sending the PWM driver gating signal comprises:
in a first working mode, controlling three of four switching transistors in a bridge arm of the inverter to be all turned on and a remaining switching transistor to be turned off, wherein a secondary-side circuit of the inverter comprises a half-bridge circuit and a filter circuit, the half-bridge circuit comprises the bridge arm, the bridge arm comprises an upper half bridge arm and a lower half bridge arm, the upper half bridge arm and the lower half bridge arm each comprise a group of switching transistors, two switching transistors comprised in each group of the switching transistors each comprise a freewheeling diode connected in parallel, and freewheeling directions of two freewheeling diodes connected in parallel in each group of the switching transistors are opposite;
in a second working mode, controlling the two switching transistors in the upper half bridge arm to be both turned on and the two switching transistors in the lower half bridge arm to be both turned off, or controlling the two switching transistors in the upper half bridge arm to be both turned off and the two switching transistors in the lower half bridge arm to be both turned on; and
controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold, to enable at least one and at most three of the four switching transistors to be turned on.

14. The control method for sending the PWM driver gating signal according to claim 13, wherein the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold comprises:
in response to the change of the absolute value of the alternating current voltage output by the filter circuit from being greater than the absolute value of the preset voltage threshold to being less than or equal to the absolute value of the preset voltage threshold, when two of the three switching transistors that are turned on in the first working mode are the same as two target switching transistors that are turned on in the second working mode to be switched to, turning off a switching transistor other than the target switching transistors in the three switching transistors, to control the secondary-side circuit to switch from the first working mode to the second working mode.

15. The control method for sending the PWM driver gating signal according to claim 13 or 14, wherein the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold comprises:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, first turning off a switching transistor whose freewheeling direction in a bidirectional current path of the half-bridge circuit in the first working mode is opposite to a current direction of a unidirectional current path of the half-bridge circuit in the first working mode, then turning on a switching transistor that is not turned on in the unidirectional current path, and then turning off a switching transistor whose freewheeling direction in the bidirectional current path is the same as the current direction of the unidirectional current path, to control the secondary-side circuit to switch from the first working mode to the second working mode, wherein
in the bidirectional current path, a current flowing through a secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

16. The control method for sending the PWM driver gating signal according to claim 13 or 14, wherein the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold comprises:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through a secondary-side winding of the transformer is the same as a direction of a current in a unidirectional current path in the first working mode, first simultaneously turning off two switching transistors in a bidirectional current path of the half-bridge circuit in the first working mode, and then turning on a switching transistor that is not turned on in the unidirectional current path of the half-bridge circuit in the first working mode, to control the secondary-side circuit to switch from the first working mode to the second working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.

17. The control method for sending the PWM driver gating signal according to claim 13 or 14, wherein the controlling the secondary-side circuit to switch from the first working mode to the second working mode, in response to a change of an absolute value of an alternating current voltage output by the filter circuit from being greater than an absolute value of a preset voltage threshold to being less than or equal to the absolute value of the preset voltage threshold comprises:
in response to the change of the absolute value of the alternating current voltage output by the filter circuit from being greater than the absolute value of the preset voltage threshold to being less than or equal to the absolute value of the preset voltage threshold, when only one of the three switching transistors that are turned on in the first working mode is the same as one target switching transistor that is turned on in the second working mode to be switched to, and a direction of a current flowing through a secondary-side winding of the transformer is opposite to a direction of a current in a unidirectional current path in the first working mode, first turning off a switching transistor whose freewheeling direction in the bidirectional current path is opposite to the current direction of the unidirectional current path, then turning on a switching transistor that is not turned on in the unidirectional current path, and then turning off a switching transistor whose freewheeling direction in the bidirectional current path is the same as the current direction of the unidirectional current path, to control the secondary-side circuit to switch from the first working mode to the second working mode, wherein
in the bidirectional current path, the current flowing through the secondary-side winding of the transformer has two directions, and the two switching transistors of the upper half bridge arm or the lower half bridge arm through which the current flows are both turned on; and in the unidirectional current path, the current flowing through the secondary-side winding has only one direction, and only one of the two switching transistors of the upper half bridge arm or the lower half bridge arm through which the current flows is turned on.
